# EUROPEAN PATENT APPLICATION

(11) **EP 4 510 670 A1**
(43) Date of publication of application: **19.02.2025**
(21) Application number: 23788639.5
(22) Date of filing: 14.04.2023
(51) Int. Cl.: H04W 16/14, H04W 72/04, H04L 5/14, H04L 27/26, H04L 5/00, H04L 1/00

(54) **METHOD AND DEVICE FOR SUPPORTING FULL-DUPLEX COMMUNICATION IN WIRELESS NETWORK**

(30) Priority: 14.04.2022 KR 20220046568; 13.04.2023 KR 20230049044
(71) Applicant: KT Corporation, Seongnam-si, Gyeonggi-do 13606 (KR)
(72) Inventor: PARK, Kyu Jin, Seongnam-si Gyeonggi-do 13606 (KR)
(74) Representative: AWA Switzerland
(86) International application number: PCT/KR2023/005072
(87) International publication number: WO 2023/200290

(57) **Abstract**

Provided are a method and device for supporting full-duplex communication in a wireless network. The method may include receiving configuration information for a full-duplex communication mode, receiving resource allocation information for allocating radio resources for uplink transmission in a predetermined frequency band, and performing uplink transmission in the full-duplex communication mode on the basis of the configuration information for the full-duplex communication mode and the resource allocation information, wherein the resource allocation information is received from a first radio access technology base station, and the frequency band is a frequency band in which radio resources for downlink transmission are allocated in a second radio access technology base station.

## Description

### Technical Field

The disclosure relates to a method and device for controlling full-duplex communication in a next-generation radio access network (hereinafter, "new radio (NR)").

### Background Art

Recently, the 3rd generation partnership project (3GPP) has approved the "Study on New Radio Access Technology", which is a study item for research on next-generation/5G radio access technology (hereinafter, referred to as "new radio" or "NR"). On the basis of the Study on New Radio Access Technology, Radio Access Network Working Group 1 (RAN WG1) has been discussing frame structures, channel coding and modulation, waveforms, multiple access methods, and the like for the new radio (NR). It is required to design the NR not only to provide an improved data transmission rate as compared with the long term evolution (LTE)/LTE-Advanced, but also to meet various requirements in detailed and specific usage scenarios.

An enhanced mobile broadband (eMBB), massive machine-type communication (mMTC), and ultra reliable and low latency communication (URLLC) are proposed as representative usage scenarios of NR. In order to meet the requirements of the individual scenarios, it is required to design NR to have flexible frame structures, compared with LTE/LTE-Advanced.

Because the requirements for data rates, latency, reliability, coverage, etc. are different from each other, there is a need for a method for efficiently multiplexing a radio resource unit based on different numerologies from other (e.g., subcarrier spacing, subframe, Transmission Time Interval (TTI), etc.) as a method for efficiently satisfying each usage scenario requirement through a frequency band constituting any NR system.

As part of such aspect, there is demand for a specific design capable of supporting full-duplex communication in a wireless network.

### Detailed Description of the Invention

### Technical Problem

The disclosure may provide a method and device for supporting full-duplex communication in NR.

### Technical Solution

In an aspect, the disclosure may provide a method for transmitting/receiving data by a user equipment (UE) in a wireless communication system. The method may include receiving configuration information about a full-duplex communication mode, receiving resource allocation information allocating a radio resource for uplink transmission in a predetermined frequency band, and performing uplink transmission in the full-duplex communication mode based on configuration information about the full-duplex communication mode and the resource allocation information, wherein the resource allocation information is received from a first radio access technology (RAT) base station, and wherein the frequency band is a frequency band where a radio resource for downlink transmission is allocated by a second radio access technology base station.

In another aspect, the disclosure may provide a method for transmitting/receiving data by a base station in a wireless communication system. The method may include transmitting configuration information about a full-duplex communication mode, transmitting resource allocation information allocating a radio resource for uplink reception in a predetermined frequency band, and performing uplink reception in the full-duplex communication mode based on configuration information about the full-duplex communication mode and the resource allocation information, wherein the resource allocation information is received from a first radio access technology (RAT) base station, and wherein the frequency band is a frequency band where a radio resource for downlink transmission is allocated by a second radio access technology base station.

In another aspect, the disclosure may provide a user equipment (UE) transmitting/receiving data in a wireless communication system. The UE may include a transmitter, a receiver, and a controller controlling an operation of the transmitter and the receiver, wherein the controller receives configuration information about a full-duplex communication mode, receives resource allocation information allocating a radio resource for uplink transmission in a predetermined frequency band, and performs uplink transmission in the full-duplex communication mode based on configuration information about the full-duplex communication mode and the resource allocation information, wherein the resource allocation information is received from a first radio access technology (RAT) base station, and wherein the frequency band is a frequency band where a radio resource for downlink transmission is allocated by a second radio access technology base station.

In another aspect, the disclosure may provide a base station transmitting/receiving data in a wireless communication system. The base station may include a transmitter, a receiver, and a controller controlling an operation of the transmitter and the receiver, wherein the controller transmits configuration information about a full-duplex communication mode, transmits resource allocation information allocating a radio resource for uplink reception in a predetermined frequency band, and performs uplink reception in the full-duplex communication mode based on configuration information about the full-duplex communication mode and the resource allocation information, wherein the resource allocation information is received from a first radio access technology (RAT) base station, and wherein the frequency band is a frequency band where a radio resource for downlink transmission is allocated by a second radio access technology base station.

### Advantageous Effects

According to the embodiments, full-duplex communication may be supported in NR.

### Brief Description of the Drawings

FIG. 1 is a view schematically illustrating an NR wireless communication system in accordance with embodiments of the present disclosure;
FIG. 2 is a view schematically illustrating a frame structure in an NR system in accordance with embodiments of the present disclosure.
FIG. 3 is a view for explaining resource grids supported by a radio access technology in accordance with embodiments of the present disclosure;
FIG. 4 is a view for explaining bandwidth parts supported by a radio access technology in accordance with embodiments of the present disclosure;
FIG. 5 is a view illustrating an example of a synchronization signal block in a radio access technology in accordance with embodiments of the present disclosure;
FIG. 6 is a signal diagram for explaining a random access procedure in a radio access technology in accordance with embodiments of the present disclosure;
FIG. 7 is a view for explaining CORESET;
FIG. 8 is a view illustrating an example of symbol level alignment among different subcarrier spacings (SCSs) in accordance with embodiments of the present disclosure;
FIG. 9 is a view schematically illustrating a bandwidth part;
FIG. 10 is a flowchart illustrating a procedure for a UE to perform uplink transmission in a full-duplex communication mode according to an embodiment;
FIG. 11 is a flowchart illustrating a procedure for a base station to perform uplink reception in a full-duplex communication mode according to an embodiment;
FIGS. 12 and 13 are views illustrating configuration information instructing to perform rate matching according to the present embodiment;
FIG. 14 is a block diagram illustrating a UE according to another embodiment; and
FIG. 15 is a block diagram illustrating a base station according to another embodiment.

### Mode for Carrying out the Invention

Hereinafter, some embodiments of the present disclosure will be described in detail with reference to the accompanying illustrative drawings. In the drawings, like reference numerals are used to denote like elements throughout the drawings, even if they are shown on different drawings. Further, in the following description of the present disclosure, a detailed description of known functions and configurations incorporated herein will be omitted when it may make the subject matter of the present disclosure rather unclear. When the expression "include", "have", "comprise", or the like as mentioned herein is used, any other part may be added unless the expression "only" is used. When an element is expressed in the singular, the element may cover the plural form unless a special mention is explicitly made of the element.

In addition, terms, such as first, second, A, B, (A), (B) or the like may be used herein when describing components of the present disclosure. Each of these terminologies is not used to define an essence, order or sequence of a corresponding component but used merely to distinguish the corresponding component from other component(s).

In describing the positional relationship between components, if two or more components are described as being "connected", "combined", or "coupled" to each other, it should be understood that two or more components may be directly "connected", "combined", or "coupled" to each other, and that two or more components may be "connected", "combined", or "coupled" to each other with another component "interposed" therebetween. In this case, another component may be included in at least one of the two or more components that are "connected", "combined", or "coupled" to each other.

In the description of a sequence of operating methods or manufacturing methods, for example, the expressions using "after", "subsequent to", "next", "before", and the like may also encompass the case in which operations or processes are performed discontinuously unless "immediately" or "directly" is used in the expression.

Numerical values for components or information corresponding thereto (e.g., levels or the like), which are mentioned herein, may be interpreted as including an error range caused by various factors (e.g., process factors, internal or external impacts, noise, etc.) even if an explicit description thereof is not provided.

The wireless communication system in the present specification refers to a system for providing various communication services, such as a voice service and a data service, using radio resources. The wireless communication system may include a user equipment (UE), a base station, a core network, and the like.

Embodiments disclosed below may be applied to a wireless communication system using various radio access technologies. For example, the embodiments may be applied to various radio access technologies such as code division multiple access (CDMA), frequency division multiple access (FDMA), time division multiple access (TDMA), orthogonal frequency division multiple access (OFDMA), single-carrier frequency division multiple access (SC-FDMA), non-orthogonal multiple access (NOMA), or the like. In addition, the radio access technology may refer to respective generation communication technologies established by various communication organizations, such as 3GPP, 3GPP2, Wi-Fi, Bluetooth, IEEE, ITU, or the like, as well as a specific access technology. For example, CDMA may be implemented as a wireless technology such as universal terrestrial radio access (UTRA) or CDMA2000. TDMA may be implemented as a wireless technology such as global system for mobile communications (GSM)/general packet radio service (GPRS)/enhanced data rates for GSM evolution (EDGE). OFDMA may be implemented as a wireless technology such as IEEE (Institute of Electrical and Electronics Engineers) 802.11 (Wi-Fi), IEEE 802.16 (WiMAX), IEEE 802-20, evolved UTRA (E-UTRA), and the like. IEEE 802.16m is evolution of IEEE 802.16e, which provides backward compatibility with systems based on IEEE 802.16e. UTRA is a part of a universal mobile telecommunications system (UMTS). 3GPP (3rd-generation partnership project) LTE (long-term evolution) is a part of E-UMTS (evolved UMTS) using evolved-UMTS terrestrial radio access (E-UTRA), which adopts OFDMA in a downlink and SC-FDMA in an uplink. As described above, the embodiments may be applied to radio access technologies that have been launched or commercialized, and may be applied to radio access technologies that are being developed or will be developed in the future.

The UE used in the specification must be interpreted as a broad meaning that indicates a device including a wireless communication module that communicates with a base station in a wireless communication system. For example, the UE includes user equipment (UE) in WCDMA, LTE, NR, HSPA, IMT-2020 (5G or New Radio), and the like, a mobile station in GSM, a user terminal (UT), a subscriber station (SS), a wireless device, and the like. In addition, the UE may be a portable user device, such as a smart phone, or may be a vehicle, a device including a wireless communication module in the vehicle, and the like in a V2X communication system according to the usage type thereof. In the case of a machine-type communication (MTC) system, the UE may refer to an MTC terminal, an M2M terminal, or a URLLC terminal, which employs a communication module capable of performing machine-type communication.

A base station or a cell in the present specification refers to an end that communicates with a UE through a network and encompasses various coverage regions such as a Node-B, an evolved Node-B (eNB), a gNode-B, a low-power node (LPN), a sector, a site, various types of antennas, a base transceiver system (BTS), an access point, a point (e.g., a transmission point, a reception point, or a transmission/reception point), a relay node, a megacell, a macrocell, a microcell, a picocell, a femtocell, a remote radio head (RRH), a radio unit (RU), a small cell, and the like. In addition, the cell may be used as a meaning including a bandwidth part (BWP) in the frequency domain. For example, the serving cell may refer to an active BWP of a UE.

The various cells listed above are provided with a base station controlling one or more cells, and the base station may be interpreted as two meanings. The base station may be 1) a device for providing a megacell, a macrocell, a microcell, a picocell, a femtocell, or a small cell in connection with a wireless region, or the base station may be 2) a wireless region itself. In the above description 1), the base station may be the devices controlled by the same entity and providing predetermined wireless regions or all devices interacting with each other and cooperatively configuring a wireless region. For example, the base station may be a point, a transmission/reception point, a transmission point, a reception point, and the like according to the configuration method of the wireless region. In the above description 2), the base station may be the wireless region in which a user equipment (UE) may be enabled to transmit data to and receive data from the other UE or a neighboring base station.

In this specification, the cell may refer to coverage of a signal transmitted from a transmission/reception point, a component carrier having coverage of a signal transmitted from a transmission/reception point (or a transmission point), or a transmission/reception point itself.

An uplink (UL) refers to a scheme of transmitting data from a UE to a base station, and a downlink (DL) refers to a scheme of transmitting data from a base station to a UE. The downlink may mean communication or communication paths from multiple transmission/reception points to a UE, and the uplink may mean communication or communication paths from a UE to multiple transmission/reception points. In the downlink, a transmitter may be a part of the multiple transmission/reception points, and a receiver may be a part of the UE. In addition, in the uplink, the transmitter may be a part of the UE, and the receiver may be a part of the multiple transmission/reception points.

The uplink and downlink transmit and receive control information over a control channel, such as a physical downlink control channel (PDCCH) and a physical uplink control channel (PUCCH). The uplink and downlink transmit and receive data over a data channel such as a physical downlink shared channel (PDSCH) and a physical uplink shared channel (PUSCH). Hereinafter, the transmission and reception of a signal over a channel, such as PUCCH, PUSCH, PDCCH, PDSCH, or the like, may be expressed as "PUCCH, PUSCH, PDCCH, PDSCH, or the like is transmitted and received".

For the sake of clarity, the following description will focus on 3GPP LTE/LTE-A/NR (New Radio) communication systems, but technical features of the disclosure are not limited to the corresponding communication systems.

The 3GPP has been developing a 5G (5th-Generation) communication technology in order to meet the requirements of a next-generation radio access technology of ITU-R after studying 4G (4th-generation) communication technology. Specifically, 3GPP is developing, as a 5G communication technology, LTE-A pro by improving the LTE-Advanced technology so as to conform to the requirements of ITU-R and a new NR communication technology that is totally different from 4G communication technology. LTE-A pro and NR all refer to the 5G communication technology. Hereinafter, the 5G communication technology will be described on the basis of NR unless a specific communication technology is specified.

Various operating scenarios have been defined in NR in consideration of satellites, automobiles, new verticals, and the like in the typical 4G LTE scenarios so as to support an enhanced mobile broadband (eMBB) scenario in terms of services, a massive machine-type communication (mMTC) scenario in which UEs spread over a broad region at a high UE density, thereby requiring low data rates and asynchronous connections, and an ultra-reliability and low-latency (URLLC) scenario that requires high responsiveness and reliability and supports highspeed mobility.

In order to satisfy such scenarios, NR introduces a wireless communication system employing a new waveform and frame structure technology, a low-latency technology, a superhigh frequency band (mmWave) support technology, and a forward compatible provision technology. In particular, the NR system has various technological changes in terms of flexibility in order to provide forward compatibility. The primary technical features of NR will be described below with reference to the drawings.

### <Overview of NR System>

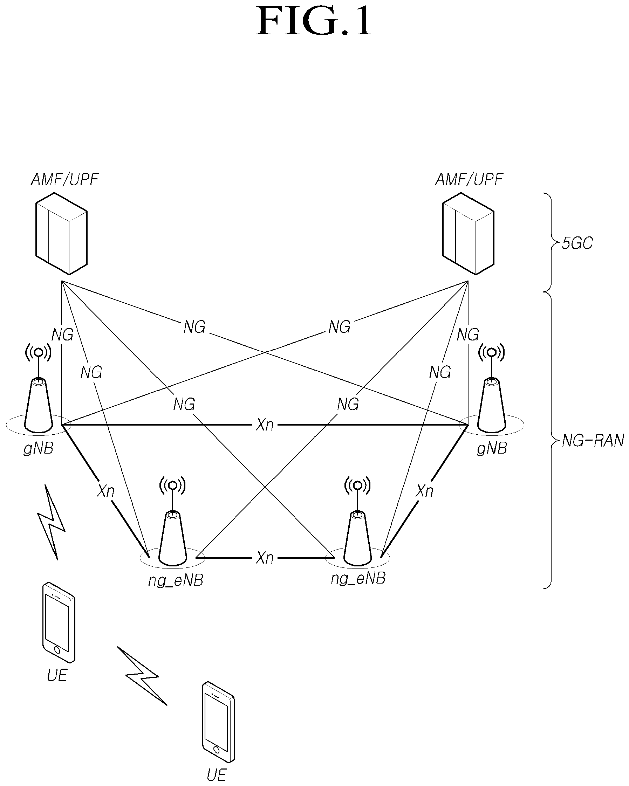

FIG. 1 is a view schematically illustrating an NR system.

Referring to FIG. 1, the NR system is divided into a 5G core network (5GC) and an NG-RAN part. The NG-RAN includes gNBs and ng-eNBs providing user plane (SDAP/PDCP/RLC/MAC/PHY) and user equipment (UE) control plane (RRC) protocol ends. The gNBs or the gNB and the ng-eNB are connected to each other through Xn interfaces. The gNB and the ng-eNB are connected to the 5GC through NG interfaces, respectively. The 5GC may be configured to include an access and mobility management function (AMF) for managing a control plane, such as a UE connection and mobility control function, and a user plane function (UPF) controlling user data. NR supports both frequency bands below 6 GHz (frequency range 1 FR1 FR1) and frequency bands equal to or greater than 6 GHz (frequency range 2 FR2 FR2).

The gNB denotes a base station that provides a UE with an NR user plane and control plane protocol end. The ng-eNB denotes a base station that provides a UE with an E-UTRA user plane and control plane protocol end. The base station described in the present specification should be understood as encompassing the gNB and the ng-eNB. However, the base station may be also used to refer to the gNB or the ng-eNB separately from each other, as necessary.

### <NR Waveform, Numerology, and Frame Structure>

NR uses a CP-OFDM waveform using a cyclic prefix for downlink transmission and uses CP-OFDM or DFT-s-OFDM for uplink transmission. OFDM technology is easy to combine with a multiple-input multiple-output (MIMO) scheme and allows a low-complexity receiver to be used with high frequency efficiency.

Since the three scenarios described above have different requirements for data rates, delay rates, coverage, and the like from each other in NR, it is necessary to efficiently satisfy the requirements for each scenario over frequency bands constituting the NR system. To this end, a technique for efficiently multiplexing radio resources based on a plurality of different numerologies has been proposed.

Specifically, the NR transmission numerology is determined on the basis of subcarrier spacing and a cyclic prefix (CP). As shown in Table 1 below, "µ" is used as an exponential value of 2 so as to be changed exponentially on the basis of 15 kHz.

**[Table 1]**

| µ | Subcarrier spacing | Cyclic prefix | Supported for data | Supported for synch |
|---|---|---|---|---|
| 0 | 15 | normal | Yes | Yes |
| 1 | 30 | normal | Yes | Yes |
| 2 | 60 | Normal, Extended | Yes | No |
| 3 | 120 | normal | Yes | Yes |
| 4 | 240 | normal | No | Yes |

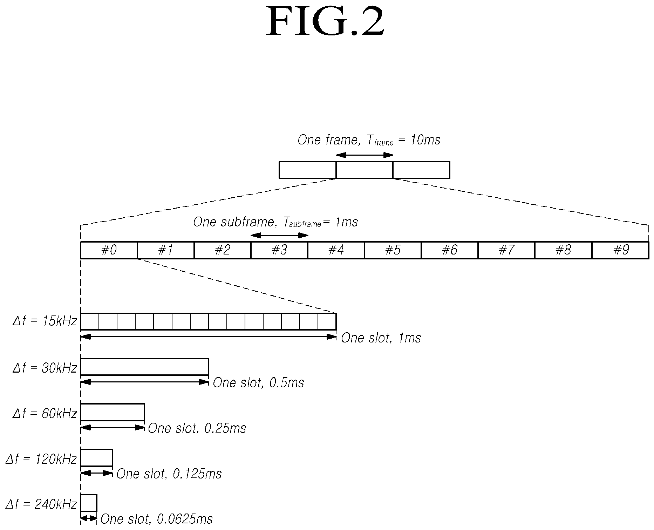

As shown in Table 1 above, NR may have five types of numerologies according to subcarrier spacing. This is different from LTE, which is one of the 4G-communication technologies, in which the subcarrier spacing is fixed to 15 kHz. Specifically, in NR, subcarrier spacing used for data transmission is 15, 30, 60, or 120 kHz, and subcarrier spacing used for synchronization signal transmission is 15, 30, 120, or 240 kHz. In addition, an extended CP is applied only to the subcarrier spacing of 60 kHz. A frame that includes 10 subframes each having the same length of 1 ms and has a length of 10 ms is defined in the frame structure in NR. One frame may be divided into half frames of 5 ms, and each half frame includes 5 subframes. In the case of a subcarrier spacing of 15 kHz, one subframe includes one slot, and each slot includes 14 OFDM symbols. FIG. 2 is a view for explaining a frame structure in an NR system. Referring to FIG. 2, a slot includes 14 OFDM symbols, which are fixed, in the case of a normal CP, but the length of the slot in the time domain may be varied depending on subcarrier spacing. For example, in the case of a numerology having a subcarrier spacing of 15 kHz, the slot is configured to have the same length of 1 ms as that of the subframe. On the other hand, in the case of a numerology having a subcarrier spacing of 30 kHz, the slot includes 14 OFDM symbols, but one subframe may include two slots each having a length of 0.5 ms. That is, the subframe and the frame may be defined using a fixed time length, and the slot may be defined as the number of symbols such that the time length thereof is varied depending on the subcarrier spacing.

NR defines a basic unit of scheduling as a slot and also introduces a minislot (or a subslot or a non-slot-based schedule) in order to reduce a transmission delay of a radio section. If wide subcarrier spacing is used, the length of one slot is shortened in inverse proportion thereto, thereby reducing a transmission delay in the radio section. A minislot (or subslot) is intended to efficiently support URLLC scenarios, and the minislot may be scheduled in 2, 4, or 7 symbol units.

In addition, unlike LTE, NR defines uplink and downlink resource allocation as a symbol level in one slot. In order to reduce a HARQ delay, the slot structure capable of directly transmitting HARQ ACK/NACK in a transmission slot has been defined. Such a slot structure is referred to as a "self-contained structure", which will be described.

NR was designed to support a total of 256 slot formats, and 62 slot formats thereof are used in 3GPP Rel-15. In addition, NR supports a common frame structure constituting an FDD or TDD frame through combinations of various slots. For example, NR supports i) a slot structure in which all symbols of a slot are configured for a downlink, ii) a slot structure in which all symbols are configured for an uplink, and iii) a slot structure in which downlink symbols and uplink symbols are mixed. In addition, NR supports data transmission that is scheduled to be distributed to one or more slots. Accordingly, the base station may inform the UE of whether the slot is a downlink slot, an uplink slot, or a flexible slot using a slot format indicator (SFI). The base station may inform a slot format by instructing, using the SFI, the index of a table configured through UE-specific RRC signaling. Further, the base station may dynamically instruct the slot format through downlink control information (DCI) or may statically or quasi-statically instruct the same through RRC signaling.

### <Physical Resources of NR>

With regard to physical resources in NR, antenna ports, resource grids, resource elements, resource blocks, bandwidth parts, and the like are taken into consideration.

The antenna port is defined to infer a channel carrying a symbol on an antenna port from the other channel carrying another symbol on the same antenna port. If large-scale properties of a channel carrying a symbol on an antenna port can be inferred from the other channel carrying a symbol on another antenna port, the two antenna ports may have a quasi-co-located or quasi-co-location (QC/QCL) relationship. The large-scale properties include at least one of delay spread, Doppler spread, a frequency shift, an average received power, and a received timing.

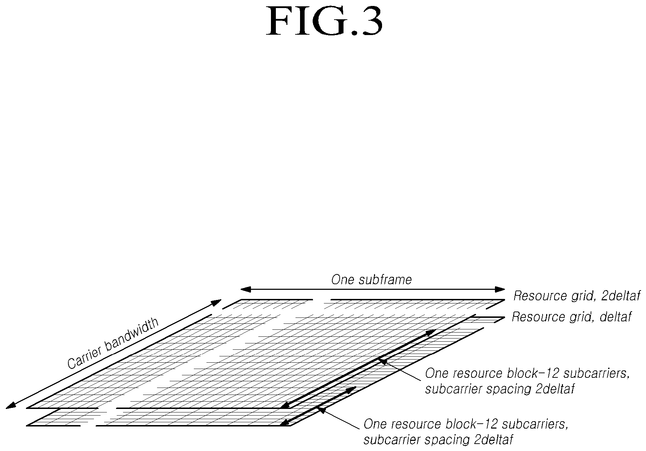

FIG. 3 illustrates resource grids supported by a radio access technology in accordance with embodiments of the present disclosure.

Referring to FIG. 3, resource grids may exist according to respective numerologies because NR supports a plurality of numerologies in the same carrier. In addition, the resource grids may exist depending on antenna ports, subcarrier spacing, and transmission directions.

A resource block includes 12 subcarriers and is defined only in the frequency domain. In addition, a resource element includes one OFDM symbol and one subcarrier. Therefore, as shown in FIG. 3, the size of one resource block may be varied according to the subcarrier spacing. Further, "Point A" that acts as a common reference point for the resource block grids, a common resource block, and a virtual resource block are defined in NR.

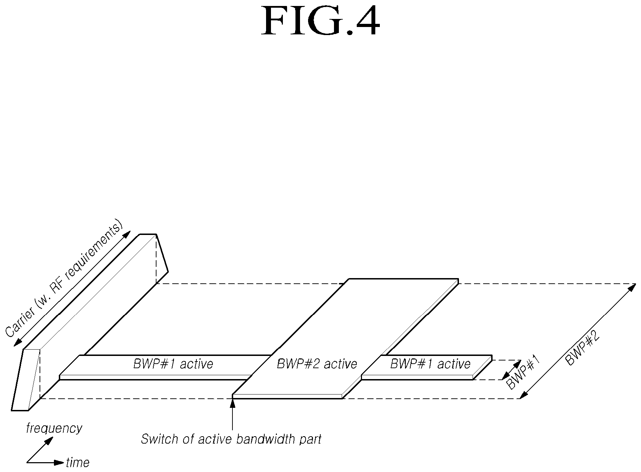

FIG. 4 illustrates bandwidth parts supported by a radio access technology in accordance with embodiments of the present disclosure.

Unlike LTE in which the carrier bandwidth is fixed to 20 MHz, the maximum carrier bandwidth is configured as 50 MHz to 400 MHz depending on the subcarrier spacing in NR. Therefore, it is not assumed that all UEs use the entire carrier bandwidth. Accordingly, as shown in FIG. 4, bandwidth parts (BWPs) may be specified within the carrier bandwidth in NR so that the UE may use the same. In addition, the bandwidth part may be associated with one numerology, may include a subset of consecutive common resource blocks, and may be activated dynamically over time. The UE has up to four bandwidth parts in each of the uplink and the downlink. The UE transmits and receives data using an activated bandwidth part during a given time.

In the case of a paired spectrum, uplink and downlink bandwidth parts are configured independently. In the case of an unpaired spectrum, in order to prevent unnecessary frequency re-tuning between a downlink operation and an uplink operation, the downlink bandwidth part and the uplink bandwidth part are configured in pairs to share a center frequency.

### <Initial Access in NR>

In NR, a UE performs a cell search and a random access procedure in order to access and communicates with a base station.

The cell search is a procedure of the UE for synchronizing with a cell of a corresponding base station using a synchronization signal block (SSB) transmitted from the base station and acquiring a physical-layer cell ID and system information.

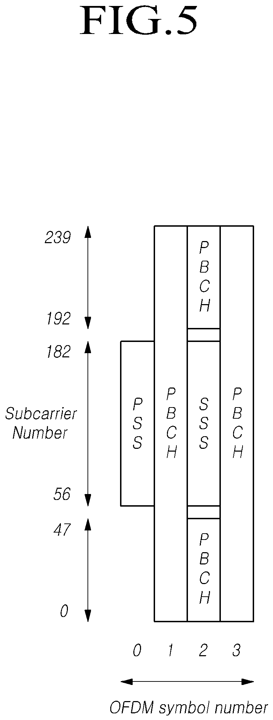

FIG. 5 illustrates an example of a synchronization signal block in a radio access technology in accordance with embodiments of the present disclosure.

Referring to FIG. 5, the SSB includes a primary synchronization signal (PSS) and a secondary synchronization signal (SSS), which occupy one symbol and 127 subcarriers, and PBCHs spanning three OFDM symbols and 240 subcarriers.

The UE monitors the SSB in the time and frequency domain, thereby receiving the SSB.

The SSB may be transmitted up to 64 times for 5 ms. A plurality of SSBs are transmitted by different transmission beams within a time of 5 ms, and the UE performs detection on the assumption that the SSB is transmitted every 20 ms based on a specific beam used for transmission. The number of beams that may be used for SSB transmission within 5 ms may be increased as the frequency band is increased. For example, up to 4 SSB beams may be transmitted at a frequency band of 3 GHz or less, and up to 8 SSB beams may be transmitted at a frequency band of 3 to 6 GHz. In addition, the SSBs may be transmitted using up to 64 different beams at a frequency band of 6 GHz or more.

One slot includes two SSBs, and a start symbol and the number of repetitions in the slot are determined according to subcarrier spacing as follows.

Unlike the SS in the typical LTE system, the SSB is not transmitted at the center frequency of a carrier bandwidth. That is, the SSB may also be transmitted at the frequency other than the center of the system band, and a plurality of SSBs may be transmitted in the frequency domain in the case of supporting a broadband operation. Accordingly, the UE monitors the SSB using a synchronization raster, which is a candidate frequency position for monitoring the SSB. A carrier raster and a synchronization raster, which are the center frequency position information of the channel for the initial connection, were newly defined in NR, and the synchronization raster may support a fast SSB search of the UE because the frequency spacing thereof is configured to be wider than that of the carrier raster.

The UE may acquire an MIB over the PBCH of the SSB. The MIB (master information block) includes minimum information for the UE to receive remaining minimum system information (RMSI) broadcast by the network. In addition, the PBCH may include information on the position of the first DM-RS symbol in the time domain, information for the UE to monitor SIB1 (e.g., SIB1 numerology information, information related to SIB1 CORESET, search space information, PDCCH-related parameter information, etc.), offset information between the common resource block and the SSB (the position of an absolute SSB in the carrier is transmitted via SIB1), and the like. The SIB1 numerology information is also applied to some messages used in the random access procedure for the UE to access the base station after completing the cell search procedure. For example, the numerology information of SIB1 may be applied to at least one of the messages 1 to 4 for the random access procedure.

The above-mentioned RMSI may mean SIB1 (system information block 1), and SIB1 is broadcast periodically (e.g., 160 ms) in the cell. SIB1 includes information necessary for the UE to perform the initial random access procedure, and SIB 1 is periodically transmitted over a PDSCH. In order to receive SIB1, the UE must receive numerology information used for the SIB1 transmission and the CORESET (control resource set) information used for scheduling of SIB1 over a PBCH. The UE identifies scheduling information for SIB1 using SI-RNTI in the CORESET. The UE acquires SIB1 on the PDSCH according to scheduling information. The remaining SIBs other than SIB1 may be periodically transmitted, or the remaining SIBs may be transmitted according to the request of the UE.

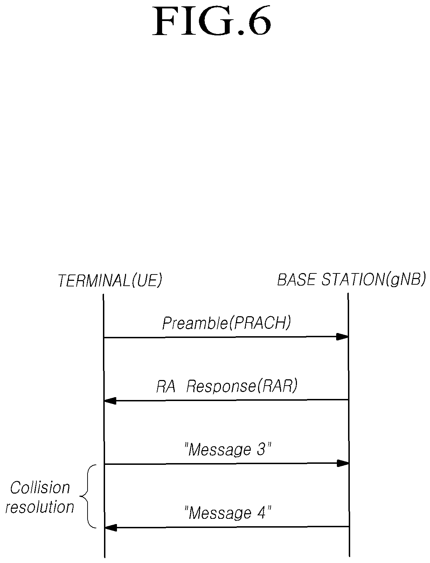

FIG. 6 is a view for explaining a random access procedure in a radio access technology.

Referring to FIG. 6, if a cell search is completed, the UE transmits a random access preamble for random access to the base station. The random access preamble is transmitted over a PRACH. Specifically, the random access preamble is periodically transmitted to the base station over the PRACH that includes consecutive radio resources in a specific slot repeated. In general, a contention-based random access procedure is performed when the UE makes initial access to a cell, and a non-contention-based random access procedure is performed when the UE performs random access for beam failure recovery (BFR).

The UE receives a random access response to the transmitted random access preamble. The random access response may include a random access preamble identifier (ID), UL Grant (uplink radio resource), a temporary C-RNTI (temporary cell-radio network temporary identifier), and a TAC (time alignment command). Since one random access response may include random access response information for one or more UEs, the random access preamble identifier may be included in order to indicate the UE for which the included UL Grant, temporary C-RNTI, and TAC are valid. The random access preamble identifier may be an identifier of the random access preamble received by the base station. The TAC may be included as information for the UE to adjust uplink synchronization. The random access response may be indicated by a random access identifier on the PDCCH, i.e., a random access-radio network temporary identifier (RA-RNTI).

Upon receiving a valid random access response, the UE processes information included in the random access response and performs scheduled transmission to the base station. For example, the UE applies the TAC and stores the temporary C-RNTI. In addition, the UE transmits, to the base station, data stored in the buffer of the UE or newly generated data using the UL Grant. In this case, information for identifying the UE must be included in the data.

Lastly, the UE receives a downlink message to resolve the contention.

### <NR CORESET>

The downlink control channel in NR is transmitted in a CORESET (control resource set) having a length of 1 to 3 symbols, and the downlink control channel transmits uplink/downlink scheduling information, an SFI (slot format index), TPC (transmit power control) information, and the like.

As described above, NR has introduced the concept of CORESET in order to secure the flexibility of a system. The CORESET (control resource set) refers to a time-frequency resource for a downlink control signal. The UE may decode a control channel candidate using one or more search spaces in the CORESET time-frequency resource. CORESET-specific QCL (quasi-colocation) assumption is configured and is used for the purpose of providing information on the characteristics of analogue beam directions, as well as delay spread, Doppler spread, Doppler shift, and an average delay, which are the characteristics assumed by existing QCL.

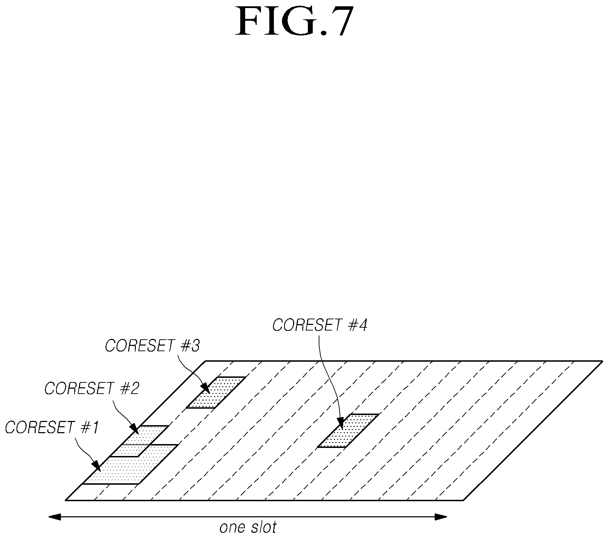

FIG. 7 illustrates CORESET.

Referring to FIG. 7, CORESETs may exist in various forms within a carrier bandwidth in a single slot, and the CORESET may include a maximum of 3 OFDM symbols in the time domain. In addition, the CORESET is defined as a multiple of six resource blocks up to the carrier bandwidth in the frequency domain.

A first CORESET, as a portion of the initial bandwidth part, is designated (e.g., instructed, assigned) through an MIB in order to receive additional configuration information and system information from a network. After establishing a connection with the base station, the UE may receive and configure one or more pieces of CORESET information through RRC signaling.

In this specification, a frequency, a frame, a subframe, a resource, a resource block, a region, a band, a subband, a control channel, a data channel, a synchronization signal, various reference signals, various signals, or various messages in relation to NR (New Radio) may be interpreted as meanings used at present or in the past or as various meanings to be used in the future.

### NR(New Radio)

The NR is required to be designed not only to provide an improved data transmission rate but also to meet various QoS requirements for each detailed and specific usage scenario, compared to the LTE/LTE-Advanced. In particular, an enhanced mobile broadband (eMBB), massive machine-type communication (mMTC), and ultra reliable and low latency communication (URLLC) are defined as representative usage scenarios of the NR. In order to meet requirements for each usage scenario, it is required to design the NR to have a more flexible frame structure as compared to the LTE/LTE-Advanced.

Since each usage scenario imposes different requirements for data rates, latency, coverage, etc., there arises a need for a method of efficiently multiplexing numerology-based (e.g., a subcarrier spacing (SCS), a subframe, a transmission time interval (TTI), etc.) radio resource units different from each other, as a solution for efficiently satisfying requirements according to usage scenarios over a frequency band provided to an NR system.

To this end, there have been discussions on i) methods of multiplexing numerologies having subcarrier spacing (SCS) values different from one another based on TDM, FDM or TDM/FDM over one NR carrier, and ii) methods of supporting one or more time units in configuring a scheduling unit in the time domain. In this regard, in the NR, a definition of a subframe has been given as one type of a time domain structure. In addition, as a reference numerology to define a corresponding subframe duration, a single subframe duration is defined as having 14 OFDM symbols of normal CP overhead based on 15 kHz subcarrier spacing (SCS), like the LTE. Therefore, the subframe of the NR has the time duration of 1 ms. Unlike the LTE, since the subframe of the NR is an absolute reference time duration, a slot and a mini-slot may be defined as a time unit for actual UL/DL data scheduling. In this case, the number of OFDM symbols which constitutes a slot, a value of y, has been defined as y = 14 regardless of the numerology.

Therefore, a slot may be made up of 14 symbols. In accordance with a transmission direction for a corresponding slot, all symbols may be used for DL transmission or UL transmission, or the symbols may be used in the configuration of a DL portion + a gap + a UL portion.

Further, a mini-slot has been defined to be made up of fewer symbols than the slot in a numerology (or SCS), and as a result, a short time domain scheduling interval may be configured for UL/DL data transmission or reception based on the mini-slot. Also, a long time domain scheduling interval may be configured for the UL/DL data transmission or reception by slot aggregation.

Particularly, in the case of the transmission or reception of latency critical data, such as the URLLC, when scheduling is performed on a slot basis based on 1 ms (14 symbols) defined in a frame structure based on a numerology having a small SCS value, for example, 15 kHz, latency requirements may be difficult to be satisfied. To this end, a mini-slot made up of fewer OFDM symbols than the slot may be defined, and thus the scheduling for the latency critical data, such as the URLLC, may be performed based on the mini-slot.

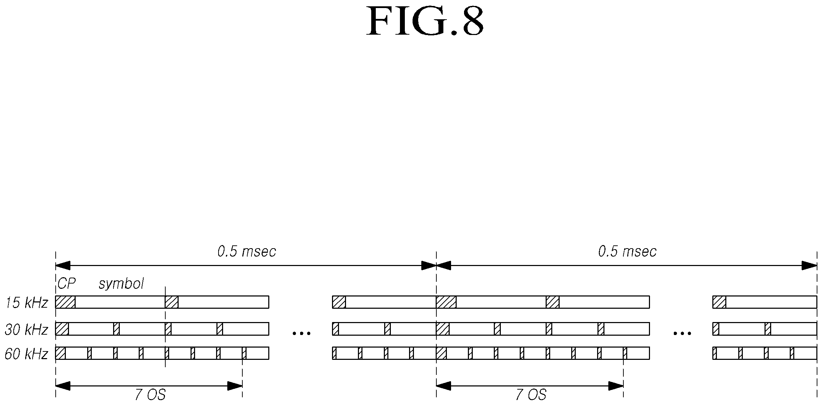

As described above, it is also contemplated to schedule the data according to the latency requirement based on the length of the slot (or minislot) defined by the numerology by supporting the numerology with the different SCS values in one NR carrier by multiplexing them in the TDM and/or FDM manner. For example, as shown in FIG. 8, when the SCS is 60 kHz, the symbol length is reduced to about 1/4 of that of the SCS 15 kHz. Therefore, when one slot is made up of 14 OFDM symbols, the slot length based on 15 kHz is 1 ms whereas the slot length based on 60 kHz is reduced to about 0.25 ms.

Thus, since different SCSs or different TTI lengths from one another are defined in the NR, technologies have been developed for satisfying requirements of each of the URLLC and the eMBB.

### Wider bandwidth operations

The typical LTE system supports scalable bandwidth operations for any LTE CC (component carrier). That is, according to a frequency deployment scenario, an LTE provider may configure a bandwidth of a minimum of 1.4 MHz to a maximum of 20 MHz in configuring a single LTE CC, and a normal LTE UE supports a transmission/reception capability of a bandwidth of 20 MHz for a single LTE CC.

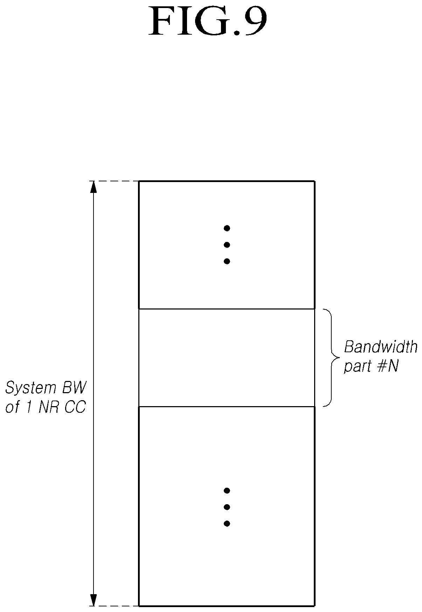

However, the NR is designed to support the UE of NR having different transmission/reception bandwidth capabilities over a single wideband NR CC. Accordingly, it is required to configure one or more bandwidth parts (BWPs) including subdivided bandwidths for an NR CC as shown FIG. 9, thereby supporting a flexible and wider bandwidth operation through configuration and activation of different bandwidth parts for respective UEs.

Specifically, one or more bandwidth parts may be configured through a single serving cell configured for a UE in NR, and the UE is defined to activate one downlink (DL) bandwidth part and one uplink (UL) bandwidth part to use the same for uplink/downlink data transmission/reception in the corresponding serving cell. In addition, in the case where a plurality of serving cells is configured for the UE (i.e., the UE to which CA is applied), the UE is also defined to activate one downlink bandwidth part and/or one uplink bandwidth part in each serving cell to use the same for uplink/downlink data transmission/reception by utilizing radio resources of the corresponding serving cell.

Specifically, an initial bandwidth part for an initial access procedure of a UE may be defined in a serving cell; one or more UE-specific bandwidth parts may be configured for each UE through dedicated RRC signaling, and a default bandwidth part for a fallback operation may be defined for each UE.

It is possible to define simultaneously activating and using a plurality of downlink and/or uplink bandwidth parts according to the capability of the UE and the configuration of the bandwidth parts in a serving cell. However, NR rel-15 defined activating and using only one downlink (DL) bandwidth part and one uplink (UL) bandwidth part at a time.

Hereinafter, a method for supporting full-duplex communication in a wireless network will be described in detail with reference to related drawings.

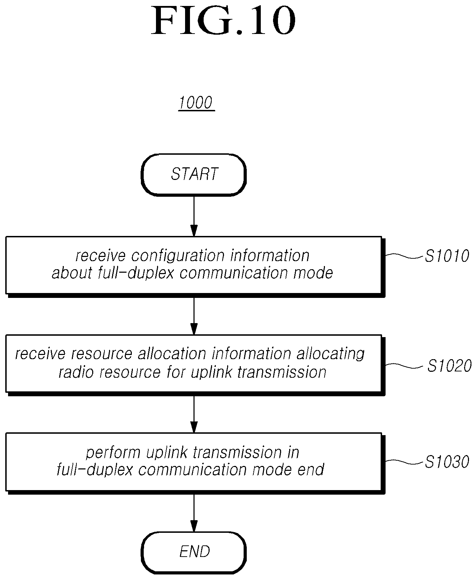

FIG. 10 is a flowchart illustrating a procedure 1000 for a UE to perform uplink transmission in a full-duplex communication mode according to an embodiment.

Referring to FIG. 10, the UE may receive configuration information about a full-duplex mode (S1010).

The configuration information about the full-duplex communication mode may include information for transmitting/receiving data in the full-duplex communication mode between the UE and the base station. For example, the configuration information about the full-duplex communication mode may include configuration information for full-duplex communication, such as information about a predetermined frequency band including a plurality of resource blocks used in the full-duplex communication mode. The frequency band used in the full-duplex communication mode may be set (e.g., configured) by the base station based on the operation capability of the base station. The frequency band may be reset due to a change in channel environment or the like.

The configuration information about the full-duplex communication mode may be transmitted through a broadcasting scheme that is generally transmitted to all the UEs in the cell. Alternatively, the configuration information may be transmitted through a multi-casting scheme in which it is transmitted to UEs requiring a full-duplex communication mode operation or a unicasting scheme in which it is transmitted only to a specific UE. The UE may receive the corresponding configuration information according to the configured scheme.

Referring back to FIG. 10, the UE may receive resource allocation information for allocating radio resources for uplink transmission in a predetermined frequency band (S1020).

The resource allocation information received by the UE may be received from a first radio access technology (RAT) base station. Hereinafter, according to an example, it is assumed that the first radio access technology base station is a 5G NR base station. However, this is merely an example and, without limitations thereto, it may be another radio access technology-based base station. The UE may be allocated a radio resource for transmitting an uplink signal or a channel from the first radio access technology base station.

In order to operate in the full-duplex communication mode, a radio resource in a predetermined frequency band may be allocated to uplink transmission of the UE through the resource allocation information. In this case, the predetermined frequency band may be configured to be the same as or at least partially include the predetermined frequency band operating in the full-duplex communication mode included in the configuration information for the above-described full-duplex communication mode.

Further, the frequency band may be configured to be the same as or include at least a portion of the frequency band to which a radio resource for downlink transmission is allocated by a second radio access technology base station. Hereinafter, it is assumed that the second radio access technology base station is an LTE base station, according to an example. However, this is merely an example and, without limitations thereto, the second radio access technology base station refers to a base station based on a heterogeneous radio access technology different from the first radio access technology.

The first radio access technology base station may allocate resources for uplink reception in the same frequency band as the frequency band in which the second radio access technology base station allocates radio resources for downlink transmission, in order to transmit and receive data to and from the UE in the full-duplex communication mode. For example, the LTE base station may configure an uplink slot for uplink reception from the 5G NR base station for a radio resource configured through a downlink subframe for downlink transmission in the corresponding frequency band. The UE may receive information about uplink configuration from the 5G NR base station.

Referring back to FIG. 10, the UE may perform uplink transmission in the full-duplex communication mode based on configuration information and resource allocation information about the full-duplex communication mode (S1030).

The UE may perform uplink transmission according to uplink allocation information in the frequency band configured to operate in the full-duplex communication mode. As described above, when full-duplex communication-based frequency sharing is performed between heterogeneous radio access technologies, cross link interference (CLI) may occur. CLI refers to interference that an uplink signal transmitted by an adjacent UE using the same radio resource causes with reception of the downlink signal of the base station performed by the UE. Accordingly, when the adjacent UE receives a downlink signal from the second radio access technology base station, uplink signal transmission of the UE to the first radio access technology base station may act as interference.

According to an embodiment, in the case of transmitting a UE-specific radio channel/signal, the base station may eliminate interference through scheduling between UEs. In contrast, in the case of transmitting a cell-specific wireless channel/signal, it is necessary to address the CLI for the adjacent UE. In other words, the downlink transmission of the second wireless access technology base station may include transmission of at least one of a synchronization signal, system information, or a cell-specific reference signal. In this case, it is necessary to eliminate CLI that may occur according to uplink transmission of the UE.

For example, it is necessary to minimize or eliminate interference of the uplink transmission of the UE with the reception of important signals or channels such as a synchronization signal for the access of the UE such as PSS/SSS, system information such as SIB transmitted through PBCH and PDSCH, and a cell-specific reference signal (RS) such as LTE CRS. Further, it is necessary to avoid critical downlink transmission in the resource configured through the physical random access channel (PRACH) rather than grant-based uplink transmission.

As such, it may be configured to perform uplink transmission in the full-duplex communication mode based on the first radio access technology in the radio resource allocated to transmission of an important downlink signal or the like based on the second radio access technology. In this case, the UE may receive configuration information indicating puncturing or rate matching for the radio resources used for downlink transmission of the second radio access technology base station. The UE may perform puncturing or rate matching on the indicated radio resource to transmit an uplink signal, a channel, or similar transmission.

For example, when allocating the NR uplink resource the downlink resource of the LTE, the NR base station may avoid resource allocation for the PSS/SSS and PBCH transmission resources of the LTE and the LTE CRS transmission resources. In other words, when scheduling NR uplink transmission, the base station may configure or instruct the UE to perform puncturing or rate matching on specific resource elements (REs) for uplink transmission such as PUSCH, PUCCH, and SRS. Accordingly, when mapping resources for uplink transmission, the UE may perform puncturing or rate matching on the corresponding REs.

According to an embodiment, the first radio access technology base station (e.g., NR base station) may configure a rate matching pattern (ratematchpattern) or a puncturing pattern (puncturingpattern) for a cell specific reference signal (CRS) based on the second radio access technology (e.g., LTE) upon uplink transmission of the UE. In this case, the LTE CRS rate matching pattern information used for NR uplink transmission may include carrier frequency information, bandwidth information, multimedia broadcast single frequency network (MBSFN) subframe configuration information, CRS port number information, v-shift information, or the like about the LTE downlink. The LTE CRS rate matching pattern information may include CRS rate matching pattern information about one or more LTE carriers.

Based on the pattern information, upon uplink transmission such as a PUSCH or a PUCCH, the UE may perform puncturing or rate matching on REs used for LTE CRS transmission in the RE mapping process in the allocated radio resource. Likewise, the UE may perform puncturing or rate matching on LTE PSS/SSS and PBCH transmission resources according to the corresponding pattern information.

According to an embodiment, the configuration information instructing to perform puncturing or rate matching may further include information instructing rate matching for the radio resource adjacent to the radio resource used for downlink transmission of the second radio access technology base station. In other words, additional rate matching may be configured for REs adjacent to LTE CRS REs or REs where PSS/SSS and PBCH transmission is performed. This is because the difference between the downlink signal reception time at the base station and the uplink transmission time of the adjacent UE may occur due to the difference between the downlink frame time (DL frame time) of the base station and the uplink frame time (UL frame time) of the UE serving as the interference source, the propagation delay, or other similar factor. In other words, since CLI is the interference of uplink transmission from one UE with downlink reception of the adjacent UE, the goal is to minimize or eliminate CLI even when a difference in symbol boundary occurs.

Accordingly, a radio resource where rate matching or puncturing is to be performed may be designated as a guard resource around the downlink transmission resource requiring CLI avoidance. Hereinafter, it is referred to as a guard resource, but this is merely an example and, if the technical concept is applied substantially identically, it is not limited to a specific name. For example, when configuring the CRS rate matching pattern, if predetermined REs adjacent to the CRS RE are configured as guard resources for avoiding CLI, the UE may perform rate matching on the corresponding guard resources as well.

For example, the guard resource may be composed of REs adjacent to LTE REs which are to be avoided in the time domain, i.e., REs of the same subcarrier in the symbol before or after the LTE CRS transmission symbol. Alternatively, it may be REs adjacent to LTE REs which are to be avoided in the frequency domain, i.e., REs corresponding to the subcarrier directly above or below the same symbol as the REs where LTE CRS transmission is performed. The guard resource may be one RE adjacent to the CRS transmission REs, or may be configured as N consecutive REs.

Further, the guard resource for rate matching may be configured in a single pattern. In this case, when configuring the rate matching for the LTE CRS, the rate matching according to the corresponding guard resource pattern may be performed together without separate signaling. Alternatively, whether additional rate matching is performed using the corresponding single guard resource pattern may be configured to signaled together with LTE CRS rate matching configuration. Alternatively, one or more guard resource patterns may be configured, and the base station may transmit guard resource pattern configuration information to the UE to be applied for rate matching.

According to an embodiment, the above-described uplink rate matching in full-duplex communication between heterogeneous radio access technologies may be applied in much the same way even when full-duplex communication between homogeneous systems is applied. The UE may further receive configuration information instructing it to perform puncturing or rate matching for a radio resource used for downlink transmission of the first radio access technology base station. In other words, when the first radio access technology base station transmits a downlink signal or the like in a frequency band where full-duplex communication is applied, the first radio access technology base station may perform rate matching when allocating resources for uplink transmission to the UE.

For example, when the 5G NR base station supports full-duplex communication, it may be configured to perform rate matching on the NR SSB when the UE performs uplink transmission. Additionally, the base station may perform rate matching on guard resources around the SSB transmission resource. In this case, when the base station configures the PUSCH or PUCCH transmission for the UE, the rate matching information for the SSB may be configured. The SSB rate matching information may include, e.g., the index value of the SSB where actual SSB transmission is performed among the SSB candidates in the half frame and *ssb-periodicityServingCell* which is confirmation information related to the half frame period. In this case, the SSB index value indication may be indicated in the form of a bitmap for each SSB index of the SSB candidates. Alternatively, the SSB index value may be directly indicated or an arbitrary pattern may be defined and indicated as a corresponding pattern value.

Furthermore, even in the case of homogeneous systems, rate matching for uplink transmission may be configured for CSI-RS transmission resources, or other downlink reference signal (DL reference signal) transmission resources such as PRS, PT-RS, and RIM-RS, in addition to the above-described SSB transmission. In this case, identification information about the type of the downlink reference signal requiring the corresponding rate matching, resource allocation information regarding where the corresponding reference signal is transmitted, or the like may be transmitted through the rate matching information for uplink transmission.

Furthermore, even in the case of the homogeneous system, when the rate matching for transmission of the NR SSB or the downlink reference signal is configured, the rate matching for the guard resource may be configured together. REs corresponding to the guard resource may be composed of REs adjacent to the transmission resource of the SSB or downlink reference signal as described above. In other words, the guard resource may be in the form of a guard time of a previous symbol or a subsequent symbol, which is an adjacent resource in the time domain, or in the form of a guard subcarrier of an upper or lower subcarrier, which is an adjacent resource in the frequency domain.

Alternatively, a single pattern may be defined for the guard resource allowing rate matching to be configured implicitly or explicitly. Additionally, one or more patterns may be defined for the guard resource, and guard resource rate matching pattern configuration information may be included as part of the rate matching configuration.

According to an embodiment, the UE may receive uplink rate matching information from the base station through higher layer signaling such as RRC signaling. Alternatively, the UE may receive the uplink rate matching information from the base station through L1/L2 control signaling.

According to an embodiment, the existing configuration information may be reused for radio resource configuration information requiring the application of rate matching. For example, the rate matching configuration for the LTE CRS may be configured so that previously defined RateMatchPatternLTE-CRS configuration information is applied to uplink rate matching. In this case, the corresponding information may also include details about the information area and guard resource configuration information for configuring whether to apply uplink rate matching. Alternatively, a separate RRC message for uplink rate matching may be defined, allowing rate matching for LTE PSS/SSS and PBCH or LTE CRS, or NR SSB or NR DL RS to be configured through the corresponding message.

According to an embodiment, the corresponding uplink rate matching may be configured independently for the PUSCH or the PUCCH, or the corresponding uplink rate matching may be configured to apply only to the PUSCH. Alternatively, it may be applied to the PUSCH by default, with the option for the base station to configure whether to apply rate matching to PUCCH.

According to the embodiments, full-duplex communication may be supported for the UE to efficiently perform uplink transmission without interference in the full-duplex communication mode in the frequency band allocated as downlink by another RAT base station.

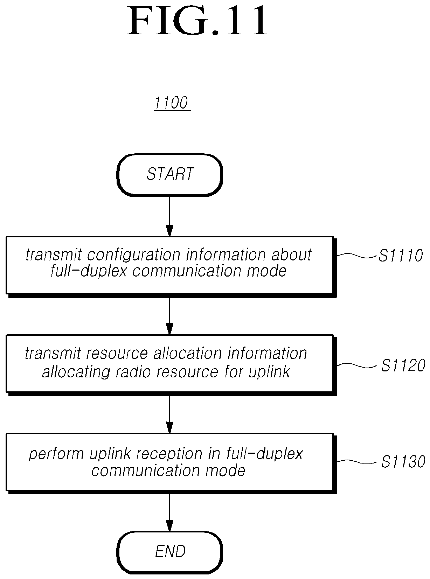

FIG. 11 is a flowchart illustrating a procedure 1100 for a base station to perform uplink reception in a full-duplex communication mode according to an embodiment. The description made in connection with FIG. 10 may be omitted to avoid redundancy and, in that case, the omitted content may be applied in substantially the same manner to the transmission UE as long as it does not conflict with the technical spirit of the invention.

Referring to FIG. 11, the base station may transmit configuration information about a full-duplex mode (S1500).

The configuration information about the full-duplex communication mode may include information for transmitting/receiving data in the full-duplex communication mode between the UE and the base station. For example, the configuration information about the full-duplex communication mode may include configuration information for full-duplex communication, such as information about a predetermined frequency band including a plurality of resource blocks used in the full-duplex communication mode. The frequency band used in the full-duplex communication mode may be arbitrarily set by the base station based on the operation capability of the base station. The frequency band may be reset due to changes in channel environment or other factors.

The base station may transmit the configuration information about the full-duplex communication mode through a broadcasting scheme in which the configuration information is transmitted to all the UEs in the cell. Alternatively, the base station may transmit the configuration information through a multi-casting scheme in which the configuration information is transmitted to certain UEs that require a full-duplex communication mode operation or a unicasting scheme in which the configuration information is transmitted only to a specific UE.

Referring back to FIG. 11, the base station may transmit resource allocation information for allocating radio resources for uplink reception in a predetermined frequency band (S1510).

The base station transmitting the uplink resource allocation information to the UE may be a first radio access technology base station. The first radio access technology base station may allocate a radio resource for transmitting an uplink signal or a channel to the UE.

In order to operate in the full-duplex communication mode, a radio resource in a predetermined frequency band may be allocated to uplink transmission of the UE through the resource allocation information. In this case, the predetermined frequency band may be configured to be the same as or at least partially include the predetermined frequency band operating in the full-duplex communication mode included in the configuration information for the above-described full-duplex communication mode.

Furthermore, the frequency band may be configured to be the same as, or include at least a portion of, the frequency band allocated for downlink transmission by a second radio access technology base station. Hereinafter, it is assumed that the second radio access technology base station is an LTE base station. However, this is merely an example. The embodiments are not limited thereto. The second radio access technology base station refers to a base station based on a heterogeneous radio access technology different from the first radio access technology.

The first radio access technology base station may allocate resources for uplink reception in the same frequency band as the one in which the second radio access technology base station allocates radio resources for downlink transmission, in order to transmit and receive data to and from the UE in full-duplex communication mode. For example, the 5G NR base station may configure an uplink slot for uplink reception using a radio resource configured in a downlink subframe for downlink transmission by the LTE base station in the corresponding frequency band. Conversely, the 5G NR base station may configure a downlink slot for downlink transmission using a radio resource allocated in an uplink subframe for uplink reception by the LTE base station.

Referring back to FIG. 11, the base station may perform uplink reception in the full-duplex communication mode based on configuration information and resource allocation information about the full-duplex communication mode (S1520).

The base station may perform uplink reception according to uplink allocation information in the frequency band configured to operate in the full-duplex communication mode. When the adjacent UE receives a downlink signal from the second radio access technology base station, uplink signal transmission of the UE to the first radio access technology base station may act as interference.

According to an embodiment, in the case of transmitting a cell-specific wireless channel/signal, it is necessary to address CLI for the adjacent UE. In other words, the downlink transmission of the second wireless access technology base station may include transmission of at least one of a synchronization signal, system information, or a cell-specific reference signal, and in this case, it is necessary to eliminate CLI that may occur according to uplink transmission of the UE.

For example, it is necessary to minimize or eliminate interference from the uplink transmission of the UE with the reception of important signals or channels, such as synchronization signals for UE access (e.g., PSS/SSS), system information (e.g., SIB) transmitted through PBCH and PDSCH, and cell-specific reference signals (e.g., LTE CRS). Additionally, it is necessary to avoid critical downlink transmission in resources configured for physical random access channel (PRACH) transmission rather than grant-based uplink transmission.

As such, uplink transmission in the full-duplex communication mode may be configured based on the first radio access technology, using radio resources allocated for the transmission of important downlink signals or similar transmissions based on the second radio access technology. In this case, the base station may transmit configuration information to the UE, indicating puncturing or rate matching for the radio resource used for downlink transmission by the second radio access technology base station. The base station may then receive the uplink signal or channel transmitted by the UE, after the UE has performed puncturing or rate matching on the indicated radio resource.

According to an embodiment, the first radio access technology base station (e.g., NR base station) may configure a rate matching pattern (ratematchpattern) or a puncturing pattern (puncturingpattern) for a cell specific reference signal (CRS) based on the second radio access technology (e.g., LTE) upon uplink transmission of the UE. In this case, the LTE CRS rate matching pattern information used for NR uplink transmission may include carrier frequency information, bandwidth information, multimedia broadcast single frequency network (MBSFN) subframe configuration information, CRS port number information, v-shift information, or the like about the LTE downlink. The LTE CRS rate matching pattern information may include CRS rate matching pattern information about one or more LTE carriers.

Based on the pattern information, upon uplink transmission such as a PUSCH or a PUCCH, the UE may perform puncturing or rate matching on REs used for LTE CRS transmission in the RE mapping process in the allocated radio resource. Likewise, the UE may perform puncturing or rate matching on LTE PSS/SSS and PBCH transmission resources according to the corresponding pattern information.

According to an embodiment, the configuration information instructing the UE to perform puncturing or rate matching may further include information that instructs rate matching on radio resources adjacent to radio resources used for downlink transmission by the second radio access technology base station. In other words, additional rate matching may be configured for REs adjacent to LTE CRS REs or REs where PSS/SSS and PBCH transmission occurs. Since CLI is interference between uplink transmission of the UE and downlink reception of the adjacent UE, this aims to minimize or eliminate CLI, even when there is a difference in symbol boundary.

Accordingly, the radio resource where rate matching or puncturing is to be performed may be set as guard resources around the downlink transmission resources that require CLI avoidance. For example, when configuring the CRS rate matching pattern, if predetermined REs adjacent to the CRS RE are configured as guard resources for CLI avoidance, the UE may also perform rate matching on these corresponding guard resources.

For example, the guard resource may be composed of REs adjacent to LTE REs that need to be avoided in the time domain, such as REs on the same subcarrier in the symbol just before or after the LTE CRS transmission symbol. Alternatively, they may be REs adjacent to LTE REs in the frequency domain, i.e., REs corresponding to the subcarrier directly above or below the same symbol as the one used for LTE CRS transmission. The guard resource may be a single RE adjacent to the CRS transmission REs, or the guard resource may be configured as N consecutive REs.

Furthermore, the guard resource for rate matching may be configured in a single pattern. In this case, when configuring rate matching for the LTE CRS, the rate matching based on the corresponding guard resource pattern may be performed without additional signaling. Alternatively, the decision to perform additional rate matching using the corresponding single guard resource pattern may be signaled together with LTE CRS rate matching configuration. Another option is that one or more guard resource patterns may be configured, and the base station may transmit guard resource pattern configuration information to the UE to be applied for rate matching.

According to an embodiment, the uplink rate matching described above for full-duplex communication between heterogeneous radio access technologies may be applied in a similar manner when full-duplex communication is used between homogeneous systems. The base station may also transmit configuration information instructing puncturing or rate matching for a radio resource used for downlink transmission by the first radio access technology base station. In other words, when the first radio access technology base station transmits a downlink signal or similar data in a frequency band where full-duplex communication is applied, the first radio access technology base station may perform rate matching when allocating resources for uplink transmission to the UE.

Further, even in the case of the homogeneous system, when rate matching is configured for the transmission of the NR SSB or downlink reference signal, the rate matching for the guard resource may be configured simultaneously. The REs corresponding to the guard resource may be configured of REs adjacent to the transmission resource of the SSB or downlink reference signal as described above. In other words, the guard resource may take the form of a guard time in the previous or subsequent symbol, which is an adjacent resource in the time domain, or a guard subcarrier in the upper or lower subcarrier, which is an adjacent resource in the frequency domain.

Alternatively, a single pattern may be defined for the guard resource, allowing rate matching to beonfigured implicitly or explicitly. Another option to define one or more patterns for the guard resource, with the guard resource rate matching pattern configuration information included during rate matching configuration.

According to an embodiment, the base station may transmit the uplink rate matching information to the UE through higher layer signaling such as RRC signaling. Alternatively, the base station may transmit the uplink rate matching information to the UE through L1/L2 control signaling.

According to an embodiment, the existing configuration information may be reused for the radio resource configuration information requiring the application of rate matching. For example, the rate matching configuration for the LTE CRS may be configured so that previously defined RateMatchPatternLTE-CRS configuration information is applied to uplink rate matching. In this case, the corresponding information may additionally include information area and guard resource configuration information for configuring whether to apply uplink rate matching. Alternatively, a separate RRC message for uplink rate matching may be defined, and rate matching for LTE PSS/SSS and PBCH or LTE CRS, or NR SSB or NR DL RS may be configured through the corresponding message.

According to an embodiment, the corresponding uplink rate matching may be configured independently for the PUSCH or the PUCCH, or the corresponding uplink rate matching may be configured to be applied only to the PUSCH. Or, the corresponding uplink rate matching may be applied to PUSCH by default, and whether to apply rate matching to PUCCH may be configured by the base station.

According to embodiments, full-duplex communication may be supported for the UE to efficiently perform uplink transmission without interference in the full-duplex communication mode in the frequency band allocated as downlink by another RAT base station.

Hereinafter, embodiments related to the method for supporting full-duplex communication in a wireless network will be described in detail with reference to related drawings.

The disclosure introduces a method for supporting full-duplex communication in a wireless mobile communication system. In particular, the disclosure introduces full-duplex communication between heterogeneous radio access technologies (RATs), as well as full-duplex communication between homogeneous RATs, and an uplink transmission/reception method for supporting the same.

Time division duplex (TDD) is a duplexing method widely used in commercial new radio (NR), i.e., 5G mobile communication systems. In TDD, time-domain radio resources are divided into downlink slots and uplink slots, and downlink slots are usually distributed at a higher ratio than uplink slots according to the distribution ratio of uplink traffic and downlink traffic. However, this limitation in the uplink slot negatively affects coverage and latency. Full-duplex communication may be applied as a technology to address such issues.

Specifically, full-duplex communication is a technique in which a gNB, i.e., a base station, simultaneously performs DL transmission and UL reception in the same radio resource. The UE may simultaneously perform DL reception and UL transmission as well. In other words, both the base station and the UE may support full duplex. However, unlike the base station, for which self-interference cancellation is structurally easy, in the UE, DL reception performance is susceptible to being affected by self-interference of UL transmission signals. Therefore, it is generally considered that the gNB operates in full-duplex communication and the UE operates in half-duplex communication. Further, a subband non-overlapping full duplex method in which to reduce the influence of self-interference, the gNB simultaneously performs DL transmission and UL reception but performs transmission and reception with distinct frequency resources, rather than using the same resource may be primarily considered.

As such, various full-duplex communication application scenarios are being considered based on the capabilities of the base station and UE, frequency bands, and frequency interference issues with other operators. However, all of the above scenarios target full-duplex communication application methods within a single radio access technology (RAT).

Accordingly, this disclosure introduces a frequency sharing technology based on full-duplex communication between different heterogeneous RATs. For example, the disclosure introduces a frequency sharing method based on full-duplex communication between LTE and 5G NR. In this case, the 5G NR base station may configure UL slot(s) and perform UL reception for the radio resource configured through a DL subframe for DL transmission by the LTE base station in any frequency band. In contrast, the 5G NR base station may configure DL slot(s) and perform DL transmission for a radio resource configured through an UL subframe for UL reception by the LTE base station. Specifically, in any paired spectrum, the LTE DL band may be used as a UL band of 5G NR, and the UL band of LTE may be used as a DL band of 5G NR. For example, for 5G migration in any LTE FDD frequency band, the DL band of the corresponding LTE FDD frequency band may be used by 5G NR for UL reception, and the UL band may be used by 5G NR for DL transmission. Conversely, in any 5G TDD frequency band, the LTE base station may configure the 5G DL slot(s) through the UL subframe(s) to be used for UL reception, and the LTE base station may configure the 5G UL slot(s) through the DL subframe(s) to be used for DL transmission.

Such spectrum sharing technology based on full-duplex communication between heterogeneous RATs may be expanded to 6G, 7G, and beyond as they are defined in the future. In other words, any 5G frequency band may be defined to be shared and used based on full-duplex communication in 6G. In this case, in the 5G frequency band, the DL section may be used as the UL section of 6G, and the 5G UL section may be used as the 6G DL section.

As such, there is an increasing need for spectrum sharing technology during the migration process of a mobile communication system. However, traditional spectrum sharing technology primarily focuses on using radio resources between different RATs in an orthogonal manner for the same transmission direction. On the other hand, in the disclosure, the same radio resources may be used in the form of a pair of different transmission directions (i.e., DL-UL pair) based on full-duplex communication between heterogeneous RATs, thereby enhancing frequency efficiency.

Additionally, the disclosure introduces a method for eliminating cross link interference (CLI) that may occur when frequency sharing based on full-duplex communication between heterogeneous RATs is performed.

CLI, which is one of the biggest challenges of full-duplex communication, refers to interference caused by an UL signal from an adjacent UE using the same radio resource when receiving a DL signal of a base station by another UE. Accordingly, when the above-described full-duplex communication between heterogeneous RATs (e.g., RAT A and RAT B) is applied, the UL signal transmission of the UE belonging to RAT B may interfere with DL signal reception of the UE belonging to RAT A. Conversely, when the UE belonging to RAT B receives the DL signal, the UL signal transmission of the UE of RAT B may act as interference.

Transmission of a UE-specific radio channel/signal may be resolved through scheduling between UEs. On the other hand, for cell-specific radio channel/signal transmission, a more proactive method for addressing CLI may be required. For example, a technology may be needed to actively avoid CLI for cell-specific reference signals (RSs) such as LTE CRS, system information such as the SIB transmitted through the PBCH and PDSCH, or synchronization signals for UE access such as PSS/SSS. Additionally, it is necessary to avoid critical DL transmission in resources configured for the physical random access channel (PRACH) rather than grant-based UL transmission.

To that end, the disclosure introduces a UL transmission method for minimizing CLI in the UE of RAT B where UL transmission is performed based on full-duplex communication in the radio resource where critical DL transmission is performed in arbitrary RAT A, i.e., UL transmission is performed using the same resource. However, as described above, specifically, the corresponding full-duplex communication scheme may also include sub-band non-overlapping full-duplex. Hereinafter, the corresponding technology will be described based on full-duplex communication between LTE and 5G NR. However, this is merely an example. The embodiments are not limited thereto. for example, the same technology may be applied between LTE and 6G, or between 5G and 6G.

When NR UL resources overlapping with DL of LTE are allocated, PSS/SSS and PBCH transmission resources of LTE and LTE CRS transmission resources may be defined to be avoided. In other words, during NR UL transmission, the base station may configure or instruct the UE to perform puncturing or rate matching on specific REs for UL transmission, such as PUSCH, PUCCH, and SRS. Accordingly, the UE performs puncturing or rate matching on the corresponding resource upon UL transmission.

To that end, the NR base station may be defined to configure a rate match pattern or a puncturing pattern for the LTE CRS when the UE transmits the UL. The LTE CRS rate match pattern information for corresponding NR UL may include carrier frequency information, bandwidth information, multimedia broadcast single frequency network (MBSFN) subframe configuration information, CRS port number information, v-shift information, or the like about the LTE DL. The LTE CRS rate match pattern information may include CRS rate match pattern information about one or more LTE carriers. Based on this, the UE may define to perform puncturing or rate matching on the corresponding LTE CRS transmission REs in the RE mapping process in the radio resource allocated for corresponding PUSCH or PUCCH transmission upon UL transmission, i.e., upon any PUSCH transmission or PUCCH transmission. Further, it may also be defined to perform puncturing or rate matching on LTE PSS/SSS and PBCH transmission resources according to the corresponding information.

However, the LTE CRS rate matching information for the UL may additionally configure additional rate matching for adjacent REs of the corresponding REs in addition to CRS REs or REs where PSS/SSS and PBCH transmission is performed. In other words, since CLI is interference from the uplink transmission of an adjacent UE with downlink reception of any UE, a difference may occur between the DL signal transmission time of the base station and the UL transmission time of the adjacent UE due to, for example, the influence of the difference between the DL frame time of the base station and the UL frame time of the adjacent UE, which is the interference source, as well as the propagation delay. In other words, differences in symbol boundary may occur.

Accordingly, a guard resource may be defined around the DL transmission resource requiring CLI avoidance so that rate matching or puncturing is performed on the corresponding guard resource as well. In other words, upon CRS rate match pattern configuration, REs adjacent to the CRS RE may be defined as a guard resource for CLI avoidance so that rate matching is also performed on the corresponding guard resource. The corresponding guard resource may be adjacent REs in the time domain, i.e., REs of the same subcarrier in the previous or subsequent symbol of the LTE CRS transmission symbol.

Or, it may be adjacent REs in the frequency domain, i.e., REs corresponding to the subcarrier above or below the same symbol as the REs where LTE CRS transmission is performed. The corresponding guard resource may be one RE adjacent to the CRS transmission RE, or the corresponding guard resource may be N consecutive REs. Further, the guard resource for rate matching may be defined so that a single pattern is defined, and when rate matching for the LTE CRS is configured, rate matching for the guard resource pattern may be performed together without separate signaling. Alternatively, the guard resource for rate matching may be defined so that signaling is performed along with LTE CRS ratematching configuration as to whether additional rate matching is performed on the corresponding single guard resource pattern. Alternatively, one or more guard resource patterns may be defined, and the base station may transmit guard resource pattern configuration information to be applied to rate matching to the UE.

The same content of the above-described UL rate matching may be applied even when applying full-duplex communication between homogeneous systems. For example, when a 5G NR base station/cell supports full-duplex communication, it may be defined to configure rate matching for NR SSB when a UE transmits UL. Further, it may also be defined to configure rate matching for guard resources around the SSB transmission resource. In this case, when the base station configures the PUSCH or PUCCH transmission of the UE, the rate matching information for the SSB may be configured. The corresponding SSB rate matching configuration information may include, e.g., the index value of the SSB where actual SSB transmission is performed among the SSB candidates in the half frame and *ssb-periodicityServingCell* which is half frame period-related configuration information. In this case, for indication of the index value of the SSB where actual SSB transmission is performed among the SSB candidates of the half frame, it may be indicated in the form of a bitmap for each SSB index of the SSB candidates in the half frame, or the SSB index value may be directly indicated, or any pattern may be defined to indicate the corresponding pattern value.

In addition to the SSB transmission, rate matching for UL transmission may be configured for CSI-RS transmission resources or other DL reference signal transmission resources, such as PRS, PT-RS, and RIM-RS. In this case, identification information about the type of DL reference signal requiring the corresponding rate matching, resource allocation information regarding where the corresponding reference signal is transmitted, or similar details may be transmitted through the rate matching configuration information for corresponding UL transmission.

Further, when the rate matching for the NR SSB or the DL reference signal of NR is configured, the rate matching for the guard resource may be configured together with the corresponding transmission resource. As described above, the guard resource may be composed of REs adjacent to the corresponding SSB or DL reference signal transmission resource. In other words, the guard resource may be an adjacent resource (previous symbol or subsequent symbol) in the time domain, i.e., a guard time form, and an adjacent resource (upper or lower subcarrier) in the frequency domain, i.e., a guard subcarrier form. A single pattern may be defined for the guard resource so that rate matching may be configured implicitly or explicitly. One or more patterns of the guard resource may be defined to include guard resource rate matching pattern configuration information when configuring rate matching.

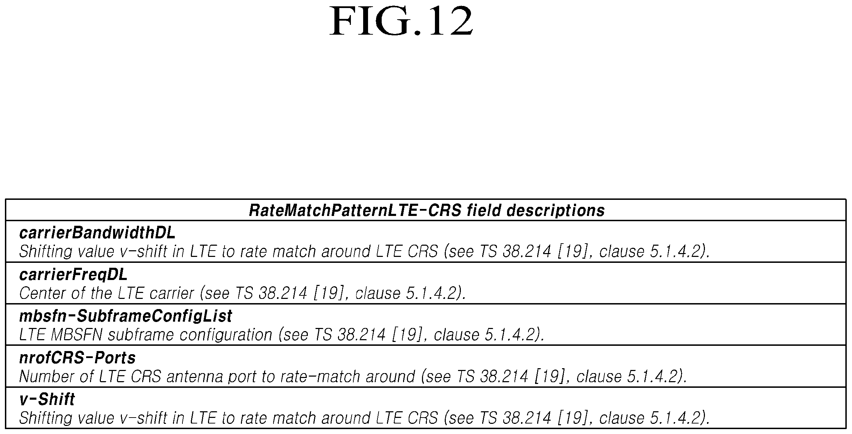

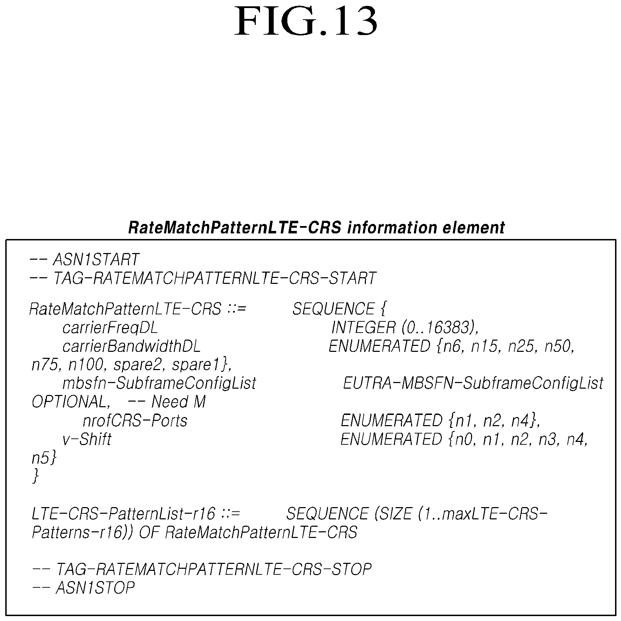

The UL rate matching configuration information described above may be configured by the base station through RRC signaling or may be indicated through L1/L2 control signaling. In this case, the radio resource configuration information requiring the corresponding rate matching may be defined to reuse the existing configuration information. For example, the rate matching configuration for the LTE CRS may be defined to apply the previously defined RateMatchPatternLTE-CRS configuration information of FIGS. 12 and 13 to the UL rate matching. In this case, the corresponding information may additionally include information area and guard resource configuration information for configuring whether to apply UL ratematching, as described above. Alternatively, a separate RRC message for UL rate matching may be defined, and rate matching for LTE PSS/SSS and PBCH or LTE CRS, or NR SSB or NR DL RS may be configured through the corresponding message.

Further, the rate matching for the corresponding UL may be defined to be independently configured for each of the PUSCH or the PUCCH, or the UL rate matching may be defined to be applied only to the PUSCH. Or, the rate matching may be defined to be applied to PUSCH by default, and whether to apply rate matching to PUCCH may be defined to be configured by the base station.

According to the embodiments described above, full-duplex communication may be supported for the UE to efficiently perform, without interference, uplink transmission in the full-duplex communication mode in the frequency band allocated as downlink by another RAT base station.

Hereinafter, configurations of a UE and a base station, which may perform all or some of operations according to the embodiments described above in connection with FIGS. 1 to 13, will be described with reference to the drawings. The above-described description may be omitted to avoid redundancy. In that case, the omitted content may be applied in substantially the same manner to the following description, as long as it does not conflict with the technical spirit of the invention.

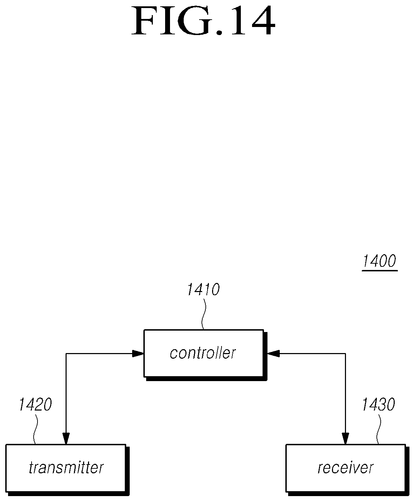

FIG. 14 is a block diagram illustrating a UE 1400 according to an embodiment.

Referring to FIG. 14, according to an embodiment, a UE 1400 includes a controller 1410, a transmitter 1420, and a receiver 1430.

The controller 1410 controls the overall operation of the UE 1400 according to the method for supporting full-duplex communication described above.

The UE may receive configuration information about a full-duplex communication mode. The configuration information about the full-duplex communication mode may include information for transmitting/receiving data in the full-duplex communication mode between the UE and the base station. For example, the configuration information about the full-duplex communication mode may include configuration information for full-duplex communication, such as information about a predetermined frequency band including a plurality of resource blocks used in the full-duplex communication mode. The frequency band used in the full-duplex communication mode may be set (e.g., configured) by the base station based on the operation capability of the base station. The frequency band may be reset due to a change in channel environment or the like.

The configuration information about the full-duplex communication mode may be transmitted through a broadcasting scheme that is generally transmitted to all the UEs in the cell. Alternatively, the configuration information may be transmitted through a multi-casting scheme in which it is transmitted to UEs requiring a full-duplex communication mode operation or a unicasting scheme in which it is transmitted only to a specific UE. The controller 1410 may receive the corresponding configuration information according to the configured scheme.

The controller 1410 may receive resource allocation information for allocating radio resources for uplink transmission in a predetermined frequency band. The resource allocation information received by the controller 1410 may be received from a first radio access technology (RAT) base station. The controller 1410 may be allocated a radio resource for transmitting an uplink signal or a channel from the first radio access technology base station.

In order to operate in the full-duplex communication mode, a radio resource in a predetermined frequency band may be allocated to uplink transmission of the UE through the resource allocation information. In this case, the predetermined frequency band may be configured to be the same as or at least partially include the predetermined frequency band operating in the full-duplex communication mode included in the configuration information for the above-described full-duplex communication mode.

Further, the frequency band may be configured to be the same as or include at least a portion of the frequency band to which a radio resource for downlink transmission is allocated by a second radio access technology base station.

The first radio access technology base station may allocate resources for uplink reception in the same frequency band as the frequency band in which the second radio access technology base station allocates radio resources for downlink transmission, in order to transmit and receive data to and from the UE in the full-duplex communication mode. For example, the LTE base station may configure an uplink slot for uplink reception from the 5G NR base station for a radio resource configured through a downlink subframe for downlink transmission in the corresponding frequency band. The controller 1410 may receive information about uplink configuration from the 5G NR base station.

The controller 1410 may perform uplink transmission in the full-duplex communication mode based on configuration information and resource allocation information about the full-duplex communication mode.

The controller 1410 may perform uplink transmission according to uplink allocation information in the frequency band configured to operate in the full-duplex communication mode. As described above, when full-duplex communication-based frequency sharing is performed between heterogeneous radio access technologies, cross link interference (CLI) may occur. Accordingly, when the adjacent UE receives a downlink signal from the second radio access technology base station, uplink signal transmission from the UE to the first radio access technology base station may act as interference.

According to an embodiment, in the case of transmitting a UE-specific radio channel/signal, the base station may eliminate interference through scheduling between UEs. In contrast, in the case of transmitting a cell-specific wireless channel/signal, it is necessary to address CLI for the adjacent UE. In other words, the downlink transmission of the second wireless access technology base station may include transmission of at least one of a synchronization signal, system information, or a cell-specific reference signal. In this case, it is necessary to eliminate CLI that may occur according to uplink transmission of the UE.

For example, it is necessary to minimize or eliminate interference from the uplink transmission of the UE with the reception of important signals or channels such as a synchronization signal for the UE access, such as PSS/SSS, system information such as SIB transmitted through PBCH and PDSCH, and a cell-specific reference signal (RS) such as LTE CRS. Further, it is necessary to avoid critical downlink transmission in the resource configured for the physical random access channel (PRACH) rather than grant-based uplink transmission.

As such, it may be configured to perform uplink transmission in the full-duplex communication mode based on the first radio access technology in the radio resource allocated to transmission of an important downlink signal or the like based on the second radio access technology. In this case, the controller 1410 may receive configuration information indicating puncturing or rate matching for the radio resources used for downlink transmission of the second radio access technology base station. The controller 1410 may perform puncturing or rate matching on the indicated radio resource to transmit an uplink signal, a channel, or similar transmission.

According to an embodiment, the first radio access technology base station (e.g., NR base station) may configure a rate matching pattern (ratematchpattern) or a puncturing pattern (puncturingpattern) for a cell specific reference signal (CRS) based on the second radio access technology (e.g., LTE) upon uplink transmission of the UE. In this case, the LTE CRS rate matching pattern information used for NR uplink transmission may include carrier frequency information, bandwidth information, multimedia broadcast single frequency network (MBSFN) subframe configuration information, CRS port number information, v-shift information, or the like about the LTE downlink. The LTE CRS rate matching pattern information may include CRS rate matching pattern information about one or more LTE carriers.

Based on the pattern information, upon uplink transmission such as a PUSCH or a PUCCH, the controller 1410 may perform puncturing or rate matching on REs used for LTE CRS transmission in the RE mapping process in the allocated radio resource. Likewise, the controller 1410 may perform puncturing or rate matching on LTE PSS/SSS and PBCH transmission resources according to the corresponding pattern information.

According to an embodiment, the configuration information instructing to perform puncturing or rate matching may further include information instructing rate matching for the radio resource adjacent to the radio resource used for downlink transmission of the second radio access technology base station. In other words, additional rate matching may be configured for REs adjacent to LTE CRS REs or REs where PSS/SSS and PBCH transmission is performed. Since CLI is the interference of uplink transmission from one UE with downlink reception of the adjacent UE, the goal is to minimize or eliminate CLI even when a difference in symbol boundary occurs.

Accordingly, a radio resource where rate matching or puncturing is to be performed may be designated as a guard resource around the downlink transmission resource requiring CLI avoidance. For example, when configuring the CRS rate matching pattern, if predetermined REs adjacent to the CRS RE are configured as guard resources for avoiding CLI, the controller 1410 may perform rate matching on the corresponding guard resource as well.

For example, the guard resource may be composed of REs adjacent to LTE REs which are to be avoided in the time domain, i.e., REs of the same subcarrier in the symbol before or after the LTE CRS transmission symbol. Alternatively, it may be REs adjacent to LTE REs which are to be avoided in the frequency domain, i.e., REs corresponding to the subcarrier directly above or below the same symbol as the REs where LTE CRS transmission is performed. The guard resource may be one RE adjacent to the CRS transmission REs, or may be configured as N consecutive REs.

Further, the guard resource for rate matching may be configured in a single pattern. In this case, when configuring the rate matching for the LTE CRS, the rate matching according to the corresponding guard resource pattern may be performed together without separate signaling. Alternatively, whether additional rate matching is performed using the corresponding single guard resource pattern may be configured to signaled together with LTE CRS rate matching configuration. Alternatively, one or more guard resource patterns may be configured, and the base station may transmit guard resource pattern configuration information to the UE be applied for rate matching.

According to an embodiment, the above-described uplink rate matching in full-duplex communication between heterogeneous radio access technologies may be applied in much the same way even when full-duplex communication between homogeneous systems is applied. The controller 1410 may further receive configuration information instructing it to perform puncturing or rate matching for a radio resource used for downlink transmission of the first radio access technology base station. In other words, when the first radio access technology base station transmits a downlink signal or the like in a frequency band where full-duplex communication is applied, the first radio access technology base station may perform rate matching when allocating resources for uplink transmission to the UE.

For example, when the 5G NR base station supports full-duplex communication, it may be configured to perform rate matching on the NR SSB when the UE performs uplink transmission. Additionally, the base station may perform rate matching on guard resources around the SSB transmission resource. In this case, when the base station configures the PUSCH or PUCCH transmission for the UE, the rate matching information for the SSB may be configured. The SSB rate matching information may include, e.g., the index value of the SSB where actual SSB transmission is performed among the SSB candidates in the half frame and *ssb-periodicityServingCell* which is confirmation information related to the half frame period. In this case, the SSB index value indication may be indicated in the form of a bitmap for each SSB index of the SSB candidates. Alternatively, the SSB index value may be directly indicated or an arbitrary pattern may be defined and indicated as a corresponding pattern value.

Furthermore, even in the case of homogeneous systems, rate matching for uplink transmission may be configured for CSI-RS transmission resources, or other downlink reference signal (DL reference signal) transmission resources such as PRS, PT-RS, and RIM-RS, in addition to the above-described SSB transmission. In this case, identification information about the type of the downlink reference signal requiring the corresponding rate matching, resource allocation information regarding where the corresponding reference signal is transmitted, or the like may be transmitted through the rate matching information for uplink transmission.

Furthermore, even in the case of the homogeneous system, when the rate matching for transmission of the NR SSB or the downlink reference signal is configured, the rate matching for the guard resource may be configured together. REs corresponding to the guard resource may be composed of REs adjacent to the transmission resource of the SSB or downlink reference signal as described above. In other words, the guard resource may be in the form of a guard time of a previous symbol or a subsequent symbol, which is an adjacent resource in the time domain, or in the form of a guard subcarrier of an upper or lower subcarrier, which is an adjacent resource in the frequency domain.

Alternatively, a single pattern may be defined for the guard resource allowing rate matching to be configured implicitly or explicitly. Additionally, one or more patterns may be defined for the guard resource, and guard resource rate matching pattern configuration information may be included as part of the rate matching configuration.

According to an embodiment, the controller 1410 may receive uplink rate matching information from the base station through higher layer signaling such as RRC signaling. Alternatively, the controller 1410 may receive the uplink rate matching information from the base station through L1/L2 control signaling.

According to an embodiment, the existing configuration information may be reused for radio resource configuration information requiring the application of rate matching. For example, the rate matching configuration for the LTE CRS may be configured so that previously defined RateMatchPatternLTE-CRS configuration information is applied to uplink rate matching. In this case, the corresponding information may also include details about the information area and guard resource configuration information for configuring whether to apply uplink rate matching. Alternatively, a separate RRC message for uplink rate matching may be defined, allowing rate matching for LTE PSS/SSS and PBCH or LTE CRS, or NR SSB or NR DL RS to be configured through the corresponding message.

According to an embodiment, the corresponding uplink rate matching may be configured independently for the PUSCH or the PUCCH, or the corresponding uplink rate matching may be configured to apply only to the PUSCH. Alternately, the corresponding uplink rate matching may be applied to the PUSCH by default, and whether to apply rate matching to PUCCH may be configured by the base station.

According to the embodiments, full-duplex communication may be supported for the UE to efficiently perform, without interference, uplink transmission in the full-duplex communication mode in the frequency band allocated as downlink by another RAT base station.

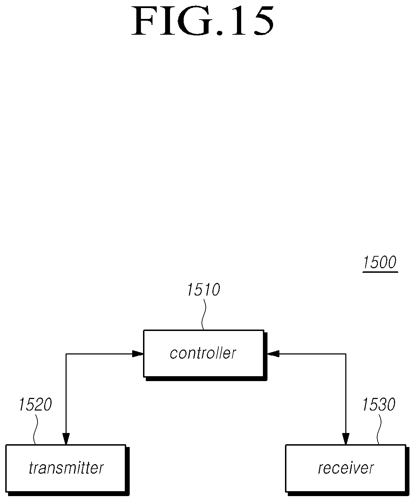

FIG. 15 is a block diagram illustrating a base station 1500 according to an embodiment.

Referring to FIG. 15, according to an embodiment, a base station 1500 includes a controller 1510, a transmitter 1520, and a receiver 1530.

The controller 1510 controls the overall operation of the base station 1500 according to the method for supporting full-duplex communication described above. The transmitter 1520 transmits downlink control information and data or messages to the UE via a corresponding channel. The receiver 1530 receives downlink control information and data or messages from the base station via a corresponding channel.

The controller 1510 may transmit configuration information about a full-duplex mode. The configuration information about the full-duplex communication mode may include information for transmitting/receiving data in the full-duplex communication mode between the UE and the base station. For example, the configuration information about the full-duplex communication mode may include configuration information for full-duplex communication, such as information about a predetermined frequency band including a plurality of resource blocks used in the full-duplex communication mode. The frequency band used in the full-duplex communication mode may be arbitrarily set by the base station based on the operation capability of the base station. The frequency band may be reset due to a change in channel environment or other factors.

The controller 1510 may transmit the configuration information about the full-duplex communication mode through a broadcasting scheme in which the configuration information is transmitted to all the UEs in the cell. Alternatively, the controller 1510 may transmit the configuration information through a multi-casting scheme in which the configuration information is transmitted to UEs that require a full-duplex communication mode operation or a unicasting scheme in which the configuration information is transmitted only to a specific UE.

The controller 1510 may transmit resource allocation information for allocating radio resources for uplink reception in a predetermined frequency band. The base station transmitting the uplink resource allocation information to the UE may be a first radio access technology base station. The first radio access technology base station may allocate a radio resource for transmitting an uplink signal or a channel to the UE.

In order to operate in the full-duplex communication mode, a radio resource in a predetermined frequency band may be allocated to uplink transmission of the UE through the resource allocation information. In this case, the predetermined frequency band may be configured to be the same as or at least partially include the predetermined frequency band operating in the full-duplex communication mode included in the configuration information for the above-described full-duplex communication mode.

Furthermore, the frequency band may be configured to be the same as or include at least a portion of the frequency band allocated for downlink transmission by a second radio access technology base station.

The first radio access technology base station may allocate resources for uplink reception in the same frequency band as the one in which the second radio access technology base station allocates radio resources for downlink transmission, in order to transmit and receive data to and from the UE in the full-duplex communication mode. For example, the 5G NR base station may configure an uplink slot for uplink reception using a radio resource configured in a downlink subframe for downlink transmission by the LTE base station in the corresponding frequency band. Conversely, the 5G NR base station may configure a downlink slot for downlink transmission using a radio resource allocated in an uplink subframe for uplink reception by the LTE base station.

The controller 1510 may perform uplink reception in the full-duplex communication mode based on configuration information and resource allocation information about the full-duplex communication mode. The controller 1510 may perform uplink reception according to uplink allocation information in the frequency band configured to operate in the full-duplex communication mode. When the adjacent UE receives a downlink signal from the second radio access technology base station, uplink signal transmission of the UE to the first radio access technology base station may act as interference.

According to an embodiment, in the case of transmitting a cell-specific wireless channel/signal, it is necessary to address the CLI for the adjacent UE. In other words, the downlink transmission of the second wireless access technology base station may include transmission of at least one of a synchronization signal, system information, or a cell-specific reference signal, and in this case, it is necessary to eliminate CLI that may occur according to uplink transmission of the UE.

For example, it is necessary to minimize or eliminate interference from the uplink transmission of the UE with the reception of important signals or channels, such as synchronization signals for UE access (e.g., PSS/SSS), system information (e.g., SIB) transmitted through PBCH and PDSCH, and cell-specific reference signals (e.g., LTE CRS). Further, it is necessary to avoid critical downlink transmission in resources configured for physical random access channel (PRACH) transmission rather than grant-based uplink transmission.

As such, uplink transmission in the full-duplex communication mode may be configured based on the first radio access technology, using radio resources allocated for the transmission of important downlink signals or similar transmissions based on the second radio access technology. In this case, the controller 1510 may transmit, to the UE, configuration information indicating puncturing or rate matching for the radio resource used for downlink transmission of the second radio access technology base station. The controller 1510 may receive the uplink signal or channel that the UE has transmitted by performing puncturing or rate matching on the indicated radio resource.

According to an embodiment, the controller 1510 of the first radio access technology base station (e.g., NR base station) may configure a rate matching pattern (ratematchpattern) or a puncturing pattern (puncturingpattern) for a cell specific reference signal (CRS) based on the second radio access technology (e.g., LTE) upon uplink transmission of the UE. In this case, the LTE CRS rate matching pattern information used for NR uplink transmission may include carrier frequency information, bandwidth information, multimedia broadcast single frequency network (MBSFN) subframe configuration information, CRS port number information, v-shift information, or the like about the LTE downlink. The LTE CRS rate matching pattern information may include CRS rate matching pattern information about one or more LTE carriers.

Based on the pattern information, upon uplink transmission such as a PUSCH or a PUCCH, the UE may perform puncturing or rate matching on REs used for LTE CRS transmission in the RE mapping process in the allocated radio resource. Likewise, the UE may perform puncturing or rate matching on LTE PSS/SSS and PBCH transmission resources according to the corresponding pattern information.

According to an embodiment, the configuration information instructing the UE to perform puncturing or rate matching may further include information that instructs for rate matching on the radio resources adjacent to the radio resources used for downlink transmission of the second radio access technology base station. In other words, additional rate matching may be configured for REs adjacent to LTE CRS REs or REs where PSS/SSS and PBCH transmission occurs. Since CLI is interference between uplink transmission of the UE and downlink reception of the adjacent UE, this aims to minimize or eliminate CLI, even when there is a difference in symbol boundary.

Accordingly, the radio resource where rate matching or puncturing is to be performed may be set as guard resources around the downlink transmission resources that require CLI avoidance. For example, when configuring the CRS rate matching pattern, if predetermined REs adjacent to the CRS RE are configured as guard resources for CLI avoidance, the UE may also perform rate matching on these corresponding guard resources as well.

For example, the guard resource may be composed of REs adjacent to LTE REs that need to be avoided in the time domain, such as, REs on the same subcarrier in the symbol just before or after the LTE CRS transmission symbol. Alternatively, they may be REs adjacent to LTE REs in the frequency domain, i.e., REs corresponding to the subcarrier directly above or below the same symbol as the one used for LTE CRS transmission. The guard resource may be a single RE adjacent to the CRS transmission REs, or the guard resource may be configured as N consecutive REs.

Furthermore, the guard resource for rate matching may be configured in a single pattern. In this case, when configuring rate matching for the LTE CRS, the rate matching based on the corresponding guard resource pattern may be performed without additional signaling. Alternatively, whether additional rate matching is performed using the corresponding single guard resource pattern may be configured to perform signaling together with LTE CRS rate matching configuration. Alternatively, one or more guard resource patterns may be configured, and the base station may transmit guard resource pattern configuration information to be applied to rate matching to the UE.

According to an embodiment, the uplink rate matching described above for full-duplex communication between heterogeneous radio access technologies may be applied in a similar manner when full-duplex communication is used between homogeneous systems. The controller 1510 may further transmit, to the UE, configuration information instructing puncturing or rate matching for a radio resource used for downlink transmission by the first radio access technology base station. In other words, when the first radio access technology base station transmits a downlink signal or similar in a frequency band where full-duplex communication is applied, the first radio access technology base station may perform rate matching when allocating resources for uplink transmission to the UE.

Further, even in the case of the homogeneous system, when rate matching is configured for the transmission of the NR SSB or downlink reference signal, the rate matching for the guard resource may be configured simultaneously. The REs corresponding to the guard resource may be configured of REs adjacent to the transmission resource of the SSB or downlink reference signal as described above. In other words, the guard resource may take the form of a guard time in the previous symbol or subsequent symbol, which is an adjacent resource in the time domain, or a guard subcarrier in the upper or lower subcarrier, which is an adjacent resource in the frequency domain.

Alternatively, a single pattern may be defined for the guard resource, allowing rate matching be configured implicitly or explicitly. Another option to define one or more patterns for the guard resource, with the guard resource rate matching pattern configuration information included during rate matching configuration.

According to an embodiment, the controller 1510 may transmit the uplink rate matching information to the UE through higher layer signaling such as RRC signaling. Alternatively, the controller 1510 may transmit the uplink rate matching information to the UE through L1/L2 control signaling.

According to an embodiment, the existing configuration information may be reused for the radio resource configuration information requiring the application of rate matching. For example, the rate matching configuration for the LTE CRS may be configured so that previously defined RateMatchPatternLTE-CRS configuration information is applied to uplink rate matching. In this case, the corresponding information may additionally include information area and guard resource configuration information for configuring whether to apply uplink rate matching. Alternatively, a separate RRC message for uplink rate matching may be defined, and rate matching for LTE PSS/SSS and PBCH or LTE CRS, or NR SSB or NR DL RS may be configured through the corresponding message.

According to an embodiment, the corresponding uplink rate matching may be configured independently for the PUSCH or the PUCCH, or the corresponding uplink rate matching may be configured to be applied only to the PUSCH. Or, the corresponding uplink rate matching may be applied to PUSCH by default, and whether to apply rate matching to PUCCH may be configured by the base station.

According to the embodiments described above, full-duplex communication may be supported for the UE to efficiently perform, without interference, uplink transmission in the full-duplex communication mode in the frequency band allocated as downlink by another RAT base station.

The embodiments described above may be supported by the standard documents disclosed in at least one of the radio access systems such as IEEE 802, 3GPP, and 3GPP2. That is, the steps, configurations, and parts, which have not been described in the present embodiments, may be supported by the above-mentioned standard documents for clarifying the technical concept of the disclosure. In addition, all terms disclosed herein may be described by the standard documents set forth above.

The above-described embodiments may be implemented by any of various means. For example, the present embodiments may be implemented as hardware, firmware, software, or a combination thereof.

In the case of implementation by hardware, the method according to the present embodiments may be implemented as at least one of an application specific integrated circuit (ASIC), a digital signal processor (DSP), a digital signal processing device (DSPD), a programmable logic device (PLD), a field programmable gate array (FPGA), a processor, a controller, a microcontroller, or a microprocessor.

In the case of implementation by firmware or software, the method according to the present embodiments may be implemented in the form of an apparatus, a procedure, or a function for performing the functions or operations described above. Software code may be stored in a memory unit, and may be driven by the processor. The memory unit may be provided inside or outside the processor, and may exchange data with the processor by any of various well-known means.

In addition, the terms "system", "processor", "controller", "component", "module", "interface", "model", "unit", and the like may generally mean computer-related entity hardware, a combination of hardware and software, software, or running software. For example, the above-described components may be, but are not limited to, a process driven by a processor, a processor, a controller, a control processor, an entity, an execution thread, a program and/or a computer. For example, both the application that is running in a controller or a processor and the controller or the processor may be components. One or more components may be provided in a process and/or an execution thread, and the components may be provided in a single device (e.g., a system, a computing device, etc.), or may be distributed over two or more devices.

The above embodiments of the present disclosure have been described only for illustrative purposes, and those skilled in the art will appreciate that various modifications and changes may be made thereto without departing from the scope and spirit of the disclosure. Further, the embodiments of the disclosure are not intended to limit, but are intended to illustrate the technical idea of the disclosure, and therefore the scope of the technical idea of the disclosure is not limited by these embodiments. The scope of the present disclosure shall be construed on the basis of the accompanying claims in such a manner that all of the technical ideas included within the scope equivalent to the claims belong to the present disclosure.

### CROSS-REFERENCE TO RELATED APPLICATION

This application claims priority, under 35 U.S.C. 119(a), to Korean Patent Application Nos. 10-2022-0046568, filed on April 14, 2022, and 10-2023-0049044, filed on April 13, 2023, in the Korean Intellectual Property Office, the disclosures of which are incorporated by reference herein in their entireties when claiming priority in countries other than the U.S.A..

## Claims

1. A method for transmitting/receiving data by a user equipment (UE) in a wireless communication system, the method comprising:
receiving first configuration information about a full-duplex communication mode;
receiving resource allocation information for allocating a radio resource for uplink transmission in a predetermined frequency band; and
performing uplink transmission in the full-duplex communication mode based on the first configuration information and the resource allocation information,
wherein the resource allocation information is received from a first radio access technology (RAT) base station, and
wherein the frequency band is a frequency band where a radio resource for downlink transmission is allocated by a second radio access technology base station.

2. The method of claim 1, further comprising receiving second configuration information for instructing puncturing or rate matching for the radio resource used for downlink transmission of the second radio access technology base station.

3. The method of claim 2, wherein the downlink transmission of the second radio access technology base station includes transmission of at least one of a synchronization signal, system information, and a cell-specific reference signal.

4. The method of claim 2, wherein the second configuration information for instructing puncturing or rate matching further includes information for instructing rate matching on a radio resource adjacent to the radio resource used for downlink transmission of the second radio access technology base station.

5. The method of claim 1, further comprising receiving third configuration information for instructing puncturing or rate matching for a radio resource used for downlink transmission of the first radio access technology base station.

6. A method for transmitting/receiving data by a base station in a wireless communication system, the method comprising:
transmitting first configuration information about a full-duplex communication mode;
transmitting resource allocation information for allocating a radio resource for uplink reception in a predetermined frequency band; and
performing uplink reception in the full-duplex communication mode based on the first configuration information and the resource allocation information,
wherein the resource allocation information is received from a first radio access technology (RAT) base station, and
wherein the frequency band is a frequency band where a radio resource for downlink transmission is allocated by a second radio access technology base station.

7. The method of claim 6, further comprising transmitting second configuration information for instructing puncturing or rate matching for the radio resource used for downlink transmission of the second radio access technology base station.

8. The method of claim 7, wherein the downlink transmission of the second radio access technology base station includes transmission of at least one of a synchronization signal, system information, and a cell-specific reference signal.

9. The method of claim 7, wherein the second configuration information further includes information for instructing rate matching on a radio resource adjacent to the radio resource used for downlink transmission of the second radio access technology base station.

10. The method of claim 6, further comprising transmitting third configuration information for instructing puncturing or rate matching for a radio resource used for downlink transmission of the first radio access technology base station.

11. A user equipment (UE) transmitting/receiving data in a wireless communication system, comprising:
a transmitter;
a receiver; and
a controller configured to control an operation of the transmitter and the receiver, wherein the controller receives first configuration information about a full-duplex communication mode, receives resource allocation information for allocating a radio resource for uplink transmission in a predetermined frequency band, and performs uplink transmission in the full-duplex communication mode based on the first configuration information and the resource allocation information,
wherein the resource allocation information is received from a first radio access technology (RAT) base station, and
wherein the frequency band is a frequency band where a radio resource for downlink transmission is allocated by a second radio access technology base station.

12. The UE of claim 11, wherein the controller further receives second configuration information for instructing puncturing or rate matching on the radio resource used for downlink transmission of the second radio access technology base station.

13. The UE of claim 12, wherein the downlink transmission of the second radio access technology base station includes transmission of at least one of a synchronization signal, system information, and a cell-specific reference signal.

14. The UE of claim 12, wherein the second configuration information further includes information for instructing rate matching for a radio resource adjacent to the radio resource used for downlink transmission of the second radio access technology base station.

15. The UE of claim 11, wherein the controller further receives third configuration information for instructing puncturing or rate matching on the radio resource used for downlink transmission of the first radio access technology base station.
